# EUROPÄISCHE PATENTANMELDUNG

(11) **EP 4 614 948 A1**
(43) Veröffentlichungstag der Anmeldung: **10.09.2025**
(21) Anmeldenummer: 24161871.9
(22) Anmeldetag: 06.03.2024
(51) Int. Cl.: H04L 67/125, G07C 9/00, H04L 12/28, H04W 4/80, H04L 12/40, H04L 41/0253, H04L 9/40

(54) **INBETRIEBNAHMEGERÄT, INBETRIEBNAHMESYSTEM UND VERFAHREN ZUR INBETRIEBNAHME EINES ZUGANGSSICHERHEITSSYSTEMS**

(71) Anmelder: dormakaba Deutschland GmbH, 58256 Ennepetal (DE)
(72) Erfinder: SUBERG, Michael, Flammersfeld 57632 (DE); BOEKHOFF, Martin, 44329 Dortmund (DE)
(74) Vertreter: Balder IP Law, S.L.

(57) **Zusammenfassung**

Die Erfindung betrifft ein Verfahren (600) zur Inbetriebnahme eines Zugangssicherheitssystems (1), insbesondere eines Fluchttürsicherungssystems, wobei das Zugangssicherheitssystem (1) eine Mehrzahl von Zugangskomponenten (10, 20, 70, 71, 200, 1010, 1200, 2010, 2200, 3010, 3200) umfasst, wobei mindestens eine erste Zugangskomponente (10, 20, 70, 71, 200, 1010, 1200, 2010, 2200, 3010, 3200) der Mehrzahl von Zugangskomponenten (10, 20, 70, 71, 200, 1010, 1200, 2010, 2200, 3010, 3200) eine drahtgebundene Kommunikationsschnittstelle aufweist, an die ein Inbetriebnahmegerät (30) anschließbar ist, wobei das Verfahren (600) insbesondere vom Inbetriebnahmegerät (30) ausgeführt wird und die folgenden Schritte umfasst:
• Einrichtung eines ersten drahtgebundenen Kommunikationskanals (80) zwischen dem Inbetriebnahmegerät (30) und der ersten Zugangskomponente mittels der drahtgebundenen Kommunikationsschnittstelle (25) der ersten Zugangskomponente,
• Einrichtung eines zweiten Kommunikationskanals (85) zwischen dem Inbetriebnahmegerät (30) und einem Mobilgerät (40) mittels einer drahtlosen Kommunikationstechnologie,
• Bereitstellung einer Kommunikation elektronischer Daten zwischen dem Mobilgerät (40) und der mindestens einen Zugangskomponente (10, 20, 70, 71, 200, 1010, 1200, 2010, 2200, 3010, 3200) basierend auf dem ersten und dem zweiten Kommunikationskanal (80, 85).

## Beschreibung

Die Erfindung betrifft ein Verfahren zur Inbetriebnahme eines Zugangssicherheitssystems, wobei das Zugangssicherheitssystem eine Mehrzahl von Zugangskomponenten umfasst. Das Zugangssicherheitssystem kann insbesondere als Fluchttürsicherungssystem ausgebildet sein. Die Erfindung betrifft des Weiteren ein Inbetriebnahmegerät, wobei Verfahrensschritte mit dem Inbetriebnahmegerät durchgeführt werden können. Darüber hinaus betrifft die Erfindung ein Inbetriebnahmesystem, wobei das Inbetriebnahmesysten das Inbetriebnahmegerät und das Zugangssicherheitssystem umfasst.

Zugangssicherheitssysteme, insbesondere zur Fluchtwegsicherung, sind aus dem Stand der Technik, z. B. aus der EP 3267450 A1 bekannt. Beispielsweise sind die Zugangskomponenten des Zugangssicherheitssystems mittels eines ersten Datenbusses miteinander vernetzt. Zu dem Zugangskomponenten des Zugangssicherheitssystem gehört auch ein Steuergerät, mit deren Hilfe zumindest eine weitere Zugangskomponenten gesteuert werden kann. Hierzu kann das Steuergerät über den ersten Datenbus ein Bustelegramm mit einem Befehl oder einer Information an die weitere Zugangskomponente senden. In dem Steuergerät sind Parameter für diese Steuerung gespeichert. Die Parameter können auf einem Personalcomputer von einem Fachpersonal eingestellt werden. Nachteilig hieran ist, dass bei der Installation oder Inbetriebnahme vor Ort der Personalcomputer mitgeführt werden muss. Ist das Zugangssicherheitssystem zur Anordnung an mehrere Türen ausgebildet, so ist zudem schwierig, die Zuordnung der einzelnen Zugangskomponenten zueinander zu überprüfen. Eine weitere Möglichkeit, Parameter in einem Steuergerät zu hinterlegen, besteht darin, aus einer Cloud auf ein Mobiltelefon die Parameter herunterzuladen und dann kabellos an das Steuergerät zu übertragen, wie aus der EP 4050577 A1 hervorgeht. Hierbei kann das Mobiltelefon ebenfalls zur Zuordnung der Zugangskomponenten zu Funktionen um Zugangssicherheitssystem helfen. Hierzu ist es aber notwendig, dass eine telekommunikative Verbindung zu der Cloud existiert und dass das Steuergerät kabellos Daten empfangen kann. Auf vielen Baustellen ist zumindest einer der Bedingungen nicht vorhanden oder sogar unerwünscht.

Es ist daher Aufgabe der Erfindung, ein Verfahren und/oder Vorrichtungen zur Inbetriebnahme eines Zugangssicherheitssystems zur Verfügung zu stellen, bei dem einfach vor Ort die Inbetriebnahme vorgenommen werden kann.

Die Aufgabe wird gelöst durch den unabhängigen Anspruch 1. Vorteilhafte Weiterbildungen des Verfahrens sind in den abhängigen Verfahrensansprüchen, der Beschreibung und in den Figuren angegeben. Ferner wird die Aufgabe auch durch eine Inbetriebnahmegerät gemäß dem Anspruch 13 gelöst. Vorteilhafte Weiterbildungen des Inbetriebnahmegeräts sind in den abhängigen Ansprüche für das Inbetriebnahmegerät, in der Beschreibung und in den Figuren angegeben. Ferner wird die Aufgabe auch durch ein Inbetriebnahmesystem mit einem erfindungsgemäßen Inbetriebnahmegerät und mit einem Zugangssicherheitssystems gemäß einem der Ansprüche 14 bis 16 gelöst. Hierbei können das Inbetriebnahmegerät und das Zugangssicherheitssystem wie in den Ansprüchen, der Beschreibung und den Zeichnungen offenbart, ausgebildet sein. Merkmale und Details, die in Zusammenhang mit dem erfindungsgemäßen Verfahren beschrieben sind, gelten dabei auch im Zusammenhang mit dem erfindungsgemäßen Inbetriebnahmegerät und dem erfindungsgemäßen Inbetriebnahmesystem und umgekehrt. Insbesondere wird ein Verfahren unter Schutz gestellt, das mit einem Inbetriebnahmegerät nach Anspruch 13 und/oder mit einem Inbetriebnahmesystem der Ansprüche 14 bis 16 durchgeführt werden kann. Ebenfalls wird ein Inbetriebnahmegerät und ein Inbetriebnahmesystem zur Durchführungs des Verfahrens der Ansprüche 1 bis 12 unter Schutz gestellt.

Das Zugangssicherheitssystem umfasst, wie erwähnt, eine Mehrzahl von Zugangskomponenten. Zumindest eine erste Zugangskomponente der Mehrzahl der Zugangskomponenten weist einer drahtgebundenen Kommunikationsschnittstelle auf. An der drahtgebundene Kommunikationsschnittstelle ist ein Inbetriebnahmegerät anschließbar. Somit ist das Inbetriebnahmegerät ausgebildet, mit der drahtgebundenen Kommunikationsschnittstelle der ersten Zugangskomponente verbunden zu sein.

Erfindungsgemäß ist vorgesehen, dass das Verfahren zur Inbetriebnahme eines Zugangssicherheitssystems die folgenden Schritte umfasst:
- Einrichtung eines ersten drahtgebundenen Kommunikationskanals zwischen dem Inbetriebnahmegerät und der ersten Zugangskomponente mittels der drahtgebundenen Kommunikationsschnittstelle der ersten Zugangskomponente,
- Einrichtung eines zweiten Kommunikationskanals zwischen dem Inbetriebnahmegerät und einem Mobilgerät mittels einer drahtlosen Kommunikationstechnologie,
- Bereitstellung einer Kommunikation elektronischer Daten zwischen dem Mobilgerät und der mindestens einen Zugangskomponente basierend auf dem ersten und dem zweiten Kommunikationskanal.

Die Zugangskomponente, die die drahtgebundene Kommunikationsschnittstelle umfasst und zu der der erste Kommunikationskanal eingerichtet wird, wird als erste Zugangskomponente bezeichnet.

Die Schritte, insbesondere die ersten beiden Schritte, können in unterschiedlicher Reihenfolge durchgeführt werden. Die Schritte werden bevorzugt von dem Inbetriebnahmegerät durchgeführt.

Das heißt, das Inbetriebnahmegerät ist an der Einrichtung des ersten und/oder zweiten Kommunikationskanals beteiligt. Als Resultat der Einrichtung des ersten und des zweiten Kommunikationskanals ist es möglich, dass elektronische Daten von dem Mobilgerät zu der ersten Zugangskomponente gelangen und/oder dass elektronische Daten von der ersten Zugangskomponente zu dem Mobilgerät gelangen. Dieses Gelangen von elektronischen Daten von der Zugangskomponente zu dem Mobilgerät und/oder von dem Mobilgerät zu der Zugangskomponente wird erfindungsgemäß bei der Inbetriebnahme des Zugangssicherheitssystems verwendet.

Bei der Einrichtung des ersten Kommunikationskanals kann das Inbetriebnahmegerät der ersten Zugangskomponente ein erstes elektrisches Signal senden und/oder von der Zugangskomponente ein erstes elektrisches Signal empfangen. Es kann sein, dass das Inbetriebnahmegerät und die erste Zugangskomponente eine Gerätekennung austauschen.

Bei der Einrichtung des zweiten Kommunikationskanals kann das Inbetriebnahmegerät dem Mobilgerät ein erstes elektrisches Signal senden und/oder von dem Mobilgerät ein erstes elektrisches Signal empfangen. Es kann sein, dass das Inbetriebnahmegerät und das Mobilgerät eine Gerätekennung austauschen.

Dadurch, dass als Resultat ein erster drahtgebundener Kommunikationskanal zwischen dem Inbetriebnahmegerät und der ersten Zugangskomponente hergestellt ist, ist es nicht notwendig, dass die Zugangskomponente des Zugangssicherheitssystems, die mit dem Inbetriebnahmegerät kommunizieren soll, über eine drahtlosen Kommunikationskanal verfügt. Dieses erhöht insbesondere die Manipulationssicherheit des Zugangssicherheitssystems. Dennoch ist es möglich, auf einfache Weise die Inbetriebnahme durchzuführen. Dadurch, dass nämlich der kabellose zweite Kommunikationskanal mit dem Mobilgerät aufgebaut worden ist, kann ein Installateur mittels des Mobilgeräts auf einfache Weise einen Inbetriebnahmeschritt durchführen. Hierzu wird erfindungsgemäß die Kommunikation zwischen der ersten Zugangskomponente und dem Mobilgerät über den ersten und den zweiten Kommunikationskanal genutzt. Entsprechend ist vorgesehen, dass ein Inbetriebnahmeschritt basierend auf elektronischen Daten, die von der ersten Zugangskomponente an das Inbetriebnahmegerät über den ersten Kommunikationskanal transferiert werden und von dem Inbetriebnahmegerät an das Mobilgerät über den zweiten Kommunikationskanal transferiert werden, durchführbar ist. Zusätzlich oder alternativ ist vorgesehen, dass ein Inbetriebnahmeschritt basierend auf elektronischer Daten, die von dem Mobilgerät an das Inbetriebnahmegerät über den zweiten Kommikationskanal transferiert werden und von dem Inbetriebnahmegerät an die erste Zugangskomponente über den ersten Kommunikationskanal transferiert werden, durchführbar ist. Aus Sicht des Inbetriebnahmegeräts formuliert: ein Inbetriebnahmeschritt kann basierend auf elektronischen Daten, die das Inbetriebnahmegerät von der ersten Zugangskomponente über den ersten Kommunikationskanal empfängt und von dem Inbetriebnahmegerät an das Mobilgerät über den zweiten Kommunikationskanal transferiert werden, durchführbar ist. Zusätzlich oder alternativ ist vorgesehen, dass ein Inbetriebnahmeschritt basierend auf elektronischer Daten, die das Inbetriebnahmegerät von dem Mobilgerät über den zweiten Kommikationskanal empfängt und von dem Inbetriebnahmegerät an die erste Zugangskomponente über den ersten Kommunikationskanal transferiert werden, durchführbar ist.

Ein Transferieren bzw. Transferiert Werden von elektronischen Daten umfasst hierbei ein Datenübertrag nach dem Push oder Pull-Prinzip oder Polling. So kann z. B. das Inbetriebnahmegerät elektronische Daten an das Mobilgerät senden oder das Mobilgerät die elektronische Daten von dem Inbetriebnahmegerät herunterladen. Die elektronischen Daten können in dem Inbetriebnahmegerät bearbeitet werden, bevor das Inbetriebnahmegerät die elektronische Daten dem Mobilgerät bzw. der ersten Zugangskomponente transferiert.

Das Mobilgerät kann eine Anzeigevorrichtung umfassen. Das Inbetriebnahmegerät kann elektronische Daten zum Anzeigen auf der Anzeigevorrichtung an das Mobilgerät transferieren. Der Installateur kann auf der Anzeigevorrichtung Informationen, die auf den elektronischen Daten basieren, optisch erfassen. Anhand dieser Informationen kann der Installateur einen Inbetriebnahmeschritt durchführen. Beispiele solcher Betriebnahmeschritte werden weiter unten angegeben.

Das Mobilgerät kann z. B. als Mobiltelefon, Tablet oder Laptop ausgebildet sein. Die Anzeigevorrichtung kann insbesondere als Bildschirm ausgebildet sein.

Das Mobilgerät kann eine Eingabevorrichtung umfassen. Der Installateur kann auf der Eingabevorrichtung eine Information eingeben. Das Inbetriebnahmegerät kann elektronische Daten basierend auf der eingegebenen Information von dem Mobilgerät empfangen. Die empfangenen elektronischen Daten können, verändert oder unverändert, von dem Inbetriebnahmegerät an die ersten Zugangskomponenten transferiert werden. Hierdurch ist ein Inbetriebnahmeschritt durchgeführt worden. Die Eingabevorrichtung kann z. B. als berührungssentiver Bildschirm oder als Tastatur ausgebildet sein. Das Mobilgerät kann insbesondere einen berührungssensitiven Bildschirm als Anzeige- und Eingabevorrichtung umfassen.

Ein Zugangssicherheitssystem dient dazu, den Zugang zu einem physischen Bereich zu gestalten. Der physische Bereich ist durch die Barriere, insbesondere durch eine Tür, versperrt. Das Zugangssicherheitssystem enthält zumindest eine Zugangskomponenten, mittels derer Zugang zu dem physischen Bereich erleichtert oder freigegeben werden kann. Somit kann eine Zugangskomponente als ein Aktor zum Öffnen und/oder Entriegeln der Zugangsbarriere ausgebildet sein. Beispielsweise kann der Aktor als Türantrieb, als ein elektrisch betriebbares Schloss, als eine elektrische Türverriegelung oder als ein Türöffner ausgebildet sein.

Das Zugangssicherheitssystem kann eine mit einem Benutzer interagierbare Zugangskomponente, die den Aktor zum Öffnen und/oder Entriegeln der Zugangsbarriere veranlasst, umfassen. Die interagierbare Zugangskomponente kann z. B. als ein Schalter, als ein Taster, insbesondere als ein Nottaster, als ein Zugangskontrollgerät oder als ein Sensor ausgebildet sein. Beispielsweise kann im Betrieb des Zugangssicherheitssystems ein Benutzer in das Erfassungsfeld eines Sensor treten und somit mit dem Sensor interagieren. Hierdurch wird ein Türantrieb als Aktor veranlasst, die Barriere zu öffnen. In einem anderen Beispiel authentifiziert ein Biometrieleser als Zugangskontrollgerät einen berechtigten Benutzer und interagiert somit mit dem Benutzer, woraufhin ein Motorschloss als Aktor veranlasst wird, eine Tür zu entriegeln. In einem noch weiteren Beispiel wird ein Nottaster von einem Benutzer betätigt, wodurch der Benutzer mit dem Nottaster interagiert. Daraufhin wird ohne Authentifizierung des Benutzers der Fluchtweg freigegeben, indem eine elektrische Türverriegelung als Aktor entriegelt wird. Das Zugangskontrollgerät dient zur Authentifizierung des Benutzers. Der Benutzer kann sich z. B. durch einen mechanischen Schlüssel, elektronischen Schlüssel oder durch ein biometrisches Merkmal authentifizieren.

Das Inbetriebnahmegerät umfasst bevorzugt eine Elektronikvorrichtung. Die Elektronikvorrichtung umfasst bevorzugt zumindest einen Prozessor. Die Elektronikvorrichtung umfasst bevorzugt zumindest einen elektronischen Speicher, insbesondere einen nicht flüchtigen elektronischen Speicher. Das Inbetriebnahmegerät umfasst zumindest eine erste Kommuikationsschnittstelle für den ersten Kommunikationskanal und eine zweite Kommunnikationsschnittstelle für den zweiten Kommunikationskanal.

Das Inbetriebnahmegerät umfasst bevorzugt ein Gehäuse, in der die Elektronikvorrichtung angeordnet ist.

Das Inbetriebnahmegerät kann ein Kabel umfassen, um den drahtgebundenen Kommunikationskanal mit der Zugangskomponente, die die drahtgebundene Schnittstelle umfasst, herzustellen.

Das Inbetriebnahmegerät ist bevorzugt dafür vorgesehen, während der Inbetriebnahme mit der ersten Zugangskomponente über den ersten Kommunikationskanal verbunden sein. Insbesondere ist das Inbetriebnahmegerät während eines Betriebs des Zugangssicherheitssystems von der ersten Zugangskomponente getrennt. D. h. der erste Kommunikationskanal ist während des regulären Betriebs des Zugangssicherheitssystems unterbrochen. Insbesondere ist das Inbetriebnahmegerät dafür vorgesehen, von dem Installateur mit sich von Zugangssicherheitssystem zu Zugangssicherheitssystem mitgeführt zu werden.

Bevorzugt ist vorgesehen, dass der der zweite Kommunikationskanal direkt zwischen dem Inbetriebnahmegerät und dem Mobilgerät eingerichtet wird. D. h. die Einrichtung eines zweiten Kommunikationskanals zwischen dem Inbetriebnahmegerät und dem Mobilgerät mittels einer drahtlosen Kommunikationstechnologie erfolgt direkt zwischen den beiden Geräten. Hierbei kann insbesondere ein Kommunikationskanal, der nach dem Standard IEEE 802.11 verwendet werden. Insbesondere können das Inbetriebnahmegerät und das Mobilgerät über WLAN miteinander kommunizieren.

Der kabellose Kommunikationskanal zwischen dem Inbetriebnahmegerät und dem Mobilgerät ist insbesondere ohne Einbeziehung des Word-Wide-Webs ausgebildet. Dieses ermöglicht es insbesondere, dass das kabellose Kommunizieren über den zweiten Kommunikationskanal in Funktionsräumen oder auf Baustellen ohne Word-Wide-Web-Empfang erfolgen kann. Als zusätzlicher oder alternativer Vorteil wird hierdurch die Manipulationssicherheit erhöht.

Bevorzugt ist vorgesehen, dass vor der Einrichtung des zweiten Kommunikationskanals folgender Schritt ausgeführt wird:
Bereitstellung eines vom World-Wide-Web isolierten lokalen Zugangspunkts, wobei das Inbetriebnahmegerät als lokaler Web-Server agiert, mit dem das Mobilgerät zur Herstellung des zweiten Kommunikationskanals verbindbar ist und vorzugsweise mittels einem auf dem Mobilgerät verfügbaren Web-Browser zugreifen kann.

Der lokaler Zugangspunkt wird von dem Inbetriebnahmegerät bereitgestellt. Das Inbetriebnahmegerät kann somit als ein Web-Server dienen. Das Inbetriebnahmegerät kann mittels des Webservers die elektronischen Daten zur Verfügung stellen.

Das Mobilgerät kann einen Webbrowser umfassen. Mittels des Webbrowsers kann das Mobilgerät auf die zur Verfügung gestellten elektronischen Daten des Inbetriebnahmegeräts zugreifen.

Bevorzugt ist das Mobilgerät frei von einer dedizierten Applikation für die Kommunikation mit dem Inbetriebnahmegerät. Vielmehr kann vorgesehen sein, dass das Inbetriebnahmegerät eine Webseite hostet, die über eine insbesondere statische IP-Adresse, vorzugsweise mittels einer mDNS-Adressierung, aufrufbar ist. Der Aufruf kann ist diesem Fall über den Webbrowser des verbundenen Mobilgeräts erfolgen.

Es kann sein, dass auf dem Inbetriebnahmegerät eine Kommunikationsaufbauhilfe umfasst. Die Kommunikationsaufbauhilfe kann insbesondere eine SSID oder einen QR-Code, mit dem das Mobilgerät die SSID des Inbetriebnahmegeräts erfassen kann, umfassen. Besonders bevorzugt kann die Kommunikationsaufbauhilfe ein Passwort umfassen. Das Passwort kann beispielsweise in einem separaten oder im oben genannten QR code enthalten sein. Mittels der Kommunikationshilfe kann die kabellose Kommunikation zwischen dem Inbetriebnahmegerät und dem Mobilgerät begonnen werden, d. h. der zweite Kommunikationskanal eingerichtet werden. Der Installateur kann z.B. den QR-Code mit dem Mobilgerät scannen, mit deren Hilfe das Mobilgerät die SSID-Adresse und vorzugsweise das Passwort des Inbetriebnahmegeräts erfassen kann. Die SSID des Inbetriebnahmegeräts kann insbesondere eine verborgene SSID sein, um die Sicherheit zu erhöhen.

Alternativ oder zusätzlich kann der Bereitstellung eines lokalen Zugangspunkts durch das Inbetriebnahmegerät folgenden Schritt umfassen: Aussenden einer SSID, um es dem Mobilgerät zu ermöglichen, die SSID zu empfangen und sich zu verbinden.

Es kann sein, dass für den Transfer elektronischer Daten von dem Inbetriebnahmegerät zu dem Mobilgerät eine statische IP-Adresse der von dem Inbetriebnahmegerät gehosteten Webseite oder eine charakteristische Zeichenfolge für die gehostete Webseite in das Mobilgerät, insbesondere in den Web-browser des Mobilgeräts, eingegeben wird. Insbesondere kann die gehostete Webseite über ein Multicast DNS Protokoll erreichbar sein. Eine entsprechende charakteristische Zeichenfolge kann beispielsweise von der Kommunikationsaufbauhilfe bereitgestellt werden. Die statische IP-Adresse kann beispielsweise über einen QR-Code der Kommunikationsaufbauhilfe abrufbar sein.

Es ist denkbar, dass die Kommunikationsaufbauhilfe einen passiven NFC-Chip umfasst. Dieser kann in den oben beschriebenen Ausführungsformen einen QR-Code ersetzen. Der NFC-Chip kann insbesondere konfiguriert sein, vom Mobilgerät, insbesondere von einer NFC-Schnittstelle des Mobilgeräts, bestromt zu werden und in einem bestromten Zustand Daten bereitzustellen, die eine SSID des Inbetriebnahmegeräts und/oder ein zugehöriges Passwort umfassen.

Es kann vorgesehen sein, dass das Transferieren der elektronischen Daten auf dem Inbetriebnahmegerät, insbesondere die Herstellung der W-LAN Verbindung von einer Authentifizierung des Installateurs abhängig ist. Anders ausgedrückt, kann eine Authentifizierung eines Installateurs eine Voraussetzung für die Einrichtung des zweiten Kommunikationskanals sein. Die Authentifizierung erfolgt insbesondere unter zur Hilfenahme des Mobilgeräts. Hierzu kann der Installateur ein Passwort, eine PIN in die Eingabevorrichtung eingeben oder sich biometrisch authentifizieren.

Zusätzlich oder alternativ kann das Aufrufen der vom Inbetriebnahmegerät gehosteten Webseite eine Authentifizierung des Installateurs erfordern. Die Authentifizierung erfolgt insbesondere unter zur Hilfenahme des Mobilgeräts. Hierzu kann der Installateur ein Passwort, eine PIN in die Eingabevorrichtung eingeben oder sich biometrisch authentifizieren.

Bevorzugt sind elektronischen Daten, die das Inbetriebnahmegerät an das Mobilgerät über den zweiten Kommunikationskanal transferiert, zumindest teilweise in einem elektronischen, nicht flüchtigen Speicher des Inbetriebnahmegeräts gespeichert worden. Die Speicherung dieser elektronischen Daten erfolgt insbesondere vor dem Schritt der Einrichtung des ersten Kommunikationskanals. Beispielsweise werden diese elektronischen Daten bei der Herstellung des Inbetriebnahmegeräts hinterlegt, von einem Server des Herstellers des Inbetriebnahmegeräts heruntergeladen und/oder von einem Personal Computer mit einer Inbetriebnahmesoftware für das Zugangssicherheitssystems transferiert. Bei den elektronischen Daten, die in dem elektronischen, nicht flüchtigen Speicher gespeichert worden sind, kann es sich z. B. um elektronische Daten zur Darstellung durch die Anzeigevorrichtung, insbesondere zur Generierung einer Benutzeroberfläche auf der Anzeigevorrichtung, handeln. Diese elektronischen Daten können beispielsweise den HTML-Quellcode im Falle eines Inbetriebnahmegeräts, das als Webserver fungiert, umfassen. Zusätzlich oder alternativ kann es sich bei den elektronischen Daten, die in dem elektronischen, nicht flüchtigen Speicher gespeichert worden sind, um elektronische Steuerungsdaten für den Betrieb des Zugangssicherheitssystem handeln, wie noch ausführlich beschrieben werden wird.

Zusätzlich oder alternativ hat das Inbetriebnahmegerät elektronische Daten, die die das Inbetriebnahmegerät an das Mobilgerät über den zweiten Kommunikationskanal transferiert, mittels des ersten Kommunikationskanals von der ersten Zugangskomponente erhalten. Die elektronischen Daten, die die das Inbetriebnahmegerät an das Mobilgerät über den zweiten Kommunikationskanal transferiert, werden dem Inbetriebnahmegerät nach dem Einrichten des ersten Kommunikationskanals bereitgestellt. Die elektronische Daten, die die das Inbetriebnahmegerät an das Mobilgerät über den zweiten Kommunikationskanal transferiert, umfassen insbesondere eine Information über das Zugangssicherheitssystem. Beispielsweise kann diese Information eine Information über die Zugangskomponenten des Zugangssicherheitssystem umfassen, insbesondere die Funktion der Zugangskomponenten.

Es kann sein, dass die elektronischen Daten, die das Inbetriebnahmegerät an das Mobilgerät über den zweiten Kommunikationskanal transferiert, teilweise elektronische Daten sind, die das Inbetriebnahmegerät vor der Einrichtung des ersten Kommunikationskanals gespeichert hat und teilweise elektronische Daten sind, die das Inbetriebnahmegerät von der ersten Zugangskomponente erhalten hat. Beispielsweise kann das Inbetriebnahmegerät elektronische Daten für die Benutzeroberfläche, auf der eine Information über das Zugangssicherheitssystem dargestellt ist, umfassen.

Die mehreren Zugangskomponenten des Zugangssicherheitssystem können über zumindest einen Datenbus miteinander verbunden sein. Bei dem Datenbus kann es sich z. B. um einen seriellen Datenbus, wie einen CAN-Bus, einen DCW^{®}-Bus oder einen RS-485-Bus, handeln. Insbesondere weisen die Busteilnehmer des Bussystems jeweils eine Busadresse oder UID auf, mit denen die Busteilnehmer im Datenbus adressierbar sind. Beispielsweise kann jeder Busteilnehmer Datenpakete über den Datenbus senden oder empfangen. Insbesondere kann jeder Busteilnehmer alle gesendete Datenpakete darauf überprüfen, ob die Datenpakete für den Busteilnehmer bestimmt sind.

Die elektronischen Daten, die das Inbetriebnahmegerät von der ersten Zugangskomponente nach dem Einrichten des ersten Kommunikationskanals erhalten hat und dem Mobilgerät bereitstellt, kann die Funktion der Zugangskomponenten im Zugangssicherheitssystem beschreiben. Somit können die elektronischen Daten, die das Inbetriebnahmegerät von der ersten Zugangskomponente nach dem Einrichten des ersten Kommunikationskanals erhalten hat und dem Mobilgerät bereitstellt, zumindest ein charakteristisches Merkmal einer Funktion zumindest einer Zugangskomponente umfassen.

Beispielsweise können die elektronischen Daten umfassen, welche Aktoren und/oder interagierbare Zugangskomponenten in dem Zugangssicherheitssystem vorhanden sind, insbesondere Teilnehmer des Datenbusses sind. Die Funktion der Zugangskomponente kann die Art der Zugangskomponente und/oder den Ort, an dem die Zugangskomponente installiert worden ist, wiedergeben. Die Art der Zugangskomponente kann z. B. "Türantrieb", "elektrisch betriebbares Schloss", "elektrische Türverriegelung", "Türöffner", "Taster", "Schalter", "Sensor" etc. sein. Der Ort der Zugangskomponente kann z. B. "am Standflügel", "am Gangflügel", "an der ersten Tür", "an der zweiten Tür" etc. sein. Eine Funktion einer Zugangskomponente, die Art und Ort umfasst, kann z. B. "Türverriegelung an der zweiten Tür" sein.

Zusätzlich oder alternativ können die elektronischen Daten, die das Inbetriebnahmegerät von der ersten Zugangskomponente nach dem Einrichten des ersten Kommunikationskanals erhalten hat und dem Mobilgerät bereitstellt, zumindest ein charakteristisches Merkmal einer Busadresse oder einer UID zumindest einer der Zugangskomponenten, bevorzugt mehrerer der Zugangskomponenten, besonders bevorzugt aller Zugangskomponenten, die mit dem Datenbus verbunden sind, umfassen.

Beispielsweise ergeben sich die Busadressen der Zugangskomponenten teilweise durch eine manuelle Einstellung an der jeweiligen Zugangskomponente. Hierzu kann zumindest ein DIP-Schalter an der Zugangskomponente, bevorzugt mehrere DIP-Schalter eingestellt werden. Das charakteristische Merkmal spiegelt bevorzugt die manuelle Einstellung wider.

Bevorzugt umfassen die elektronischen Daten, die das Inbetriebnahmegerät von der ersten Zugangskomponente nach dem Einrichten des ersten Kommunikationskanals erhalten hat und dem Mobilgerät bereitstellt, sowohl die Art der Zugangskomponenten, z. B. Türantrieb, Türverriegelung, Motorschloss, Nottaster, Sensor, etc., als auch ein charakteristisches Merkmal einer Busadresse oder einer UID. Das charakteristische Merkmal der Busadresse kann z. B. als eine Ziffer ausgestaltet sein.

In einem Ausführungsbeispiel kann vorgesehen sein, dass das Inbetriebnahmegerät anhand der Busadresse der Zugangskomponente auf den Ort und/oder die Funktion der Zugangskomponente im Zugangssicherheitssystem schließen kann.

Es kann sein, dass das Inbetriebnahmegerät die elektronischen Informationen, die das Inbetriebnahmegerät von der ersten Zugangskomponente erhält, elektronisch verarbeitet und in verarbeiteter Form dem Mobilgerät bereitstellt.

Alternativ kann eine manuelle Handlung an der Zugangskomponente selber oder der Zugangskomponente zuordbar durch den Installateur vorgenommen worden sein, um die Funktion der Zugangskomponente in dem Zugangssicherheitssystem festzulegen. Beispielsweise kann der Installateur durch eine manuelle Handlung an der Zugangskomponente oder durch eine manuelle Handlung, die der Zugangskomponente zuordbar ist, z. B. Drücken des Nottaster, Auslösen des Sensors, der Zugangskomponente eine Funktion in dem Zugangssicherheitssystem zuweisen. Diese so gewonnene Information über die Funktion wird von der ersten Zugangskomponente an das Inbetriebnahmegerät und von dem Inbetriebnahmegerät an das Mobilgerät von dem Inbetriebnahmegerät transferiert.

Es kann vorgesehen sein, dass das Zugangssicherheitssystem Zugangskomponenten für mehrere Zugangsbarrieren umfasst. Beispielsweise sind Zugangskomponenten für mehrere Zugangsbarrieren über einen Datenbus miteinander verbunden und bilden das Zugangssicherheitssystem. Es kann sein, dass die elektronischen Daten, die das Inbetriebnahmegerät dem Mobilgerät bereitstellt, derart ausgebildet sind, dass die charakteristischen Merkmale der Zugangskomponenten nach Zugangsbarrieren geordnet auf der Anzeigevorrichtung angezeigt werden können.

Es kann vorgesehen sein, dass eine Zugangskomponente des Sicherheitssystems eine optische Anzeige umfasst, auf der Inbetriebnahmeinformationen, insbesondere ein charakteristisches Merkmal einer Busadresse oder einer UID oder einer Art der Zugangskomponente oder eine Funktion der Zugangskomponente, dargestellbar sind. Während der Inebtriebnahme wird die Inbetriebnahmeinformation auf der Anzeige dargestellt. Beispielsweise kann die optische Anzeige mehrere LED, insbesondere Multi-Colour-LEDs, umfassen, mit denen die Inbetriebnahmeinformation dargestellt wird. Es kann vorgesehen sein, dass die elektronischen Daten, die das Inbetriebnahmegerät an das Mobilgerät transferiert, dazu geeignet sind, die Inbetriebnahmeinformation, der optischen Anzeige nachgebildet, auf der Anzeigevorrichtung darzustellen. Beispielsweise ist die optische Anzeige ringförmig aufgebaut, wobei Segmente der ringförmigen Anzeige in unterschiedlichen Farben leuchten können. Entsprechend sind die elektronischen Daten ausgebildet, auf der Anzeigevorrichtung des Mobilgeräts Ringe darzustellen, deren Segmente in unterschiedlichen Farben dargestellt sind.

Die elektronischen Daten über das Zugangssicherheitssystem, die das Inbetriebnahmegerät dem Mobilgerät bereitstellt, dienen dazu, dass der Installateur den Aufbau oder Zustand des Zugangssicherheitssystems überprüfen kann. Hierzu werden die entsprechende Information über das Zugangssicherheitssystem, wie beschrieben, auf der Anzeigevorrichtung angezeigt. Somit kann der Inbetriebnahmeschritt, den der Installateur durchführen kann, nachdem der erste und der zweite Kommunikationskanal eingerichtet worden sind, dadurch ausgebildet sein, dass der Installateur die Funktion und/oder den Aufbau des Zugangssicherheitssystem überprüft.

Vorzugsweise ist vorgesehen, dass das Verfahren ferner umfasst:
- Transferieren von elektronischen Daten von dem Installationsgerät an das Mobilgerät mittels des zweiten Kommunikationskanals, wobei die elektronischen Daten, die das Inbetriebnahmegerät an das Mobilgerät transferiert, Daten zur Auswahl und/oder zum freien Eingeben und/oder zur Bestätigung mittels einer Eingabevorrichtung des Mobilgeräts betreffen,
- Empfang elektronischer Daten vom Mobilgerät mittels des zweiten Kommunikationskanals, wobei die elektronischen Daten auf von einem Installateur in das Mobilgerät eingegebenen Informationen basieren und Steuerungsdaten für das Zugangssicherheitssystem betreffen;
- Transferieren der empfangenen elektronischen Daten an die mindestens eine Zugangskomponente mittels des ersten Kommunikationskanals.

Die elektronischen Daten, die das Inbetriebnahmegerät zu dem Mobilgerät transferiert, können somit zusätzlich oder alternativ Daten zur Auswahl und/oder zum freien Eingeben und/oder zur Bestätigung mittels der Eingabevorrichtung des Mobilgeräts betreffen. Somit können die elektronischen Daten z. B. ausgebildet sein, eine Eingabemaske auf der Benutzeroberfläche, die auf der Anzeigevorrichtung dargestellt wird, zu generieren. In der Eingabemaske kann der Installateur elektronische Daten auswählen oder frei eingeben oder bestätigen. Hierdurch kann der Installateur eine Information in das Mobilgerät eingeben. Diese Information betrifft Steuerungsdaten für das Zugangssicherheitssystem.

Beispielsweise kann der Installateur aus mehreren, auf dem Anzeigevorrichtung dargestellten Parameter zum Betrieb des Zugangssicherheitssystems auswählen. Zusätzlich oder alternativ kann der Installateur Parameter zum Betrieb des Zugangssicherheitssystems frei eingeben, z. B. in ein Feld der Eingabemaske. Zusätzlich oder alternativ kann der Installateur einen vorgeschlagenen Parameter zum Betrieb des Zugangssicherheitssystems durch eine Eingabe auf der Eingabevorrichtung bestätigen. Eine Auswahl eines Parameters aus mehreren angebotenen Optionen oder eine freie Eingabe eines Parameters oder eine Bestätigung eines Parameters werden zusammen als Parametereinstellung bezeichnet.

Das Mobilgerät kann daraufhin elektronische Daten, die auf der eingegebenen Information basieren, über den zweiten Kommunikationskanal an das Inbetriebnahmegerät transferieren. Das Inbetriebnahmegerät kann elektronische Daten, die auf der eingegebenen Information basieren, über den zweiten Kommunikationskanal empfangen. Beispielsweise kann der eingestellte Parameter an das Inbetriebnahmegerät transferiert werden.

Über den ersten Kommunikationskanal kann die von dem Installateur eingegebene Information, die Steuerungsdaten für das Zugangssicherheitssystem betreffen, an das Zugangssicherheitssystem transferiert werden. Hierbei können die von dem Mobilgerät empfangenen elektronischen Daten vor dem Transferieren über den ersten Kommunikationskanal optional transformiert werden. Somit kann der Verfahren den Schritt umfassen:
Transformieren der empfangenen elektronischen Daten in ein Datenformat, welches, von einer oder mehreren Zugangskomponenten der Mehrzahl von Zugangskomponenten, ausführbare Steuerungsdaten umfasst.

Die elektronische Steuerungsdaten, die das Inbetriebnahmegerät über den ersten Kommunikationskanal transferiert, können zumindest einen mittels der Eingabevorrichtung eingestellten Parameter umfassen, wie bereits in dem vorangehenden Absätzen erwähnt worden ist.

Zusätzlich oder alternativ können die Steuerungsdaten zumindest eine mittels der Eingabevorrichtung ausgewählte, vor der Auswahl vorkonfigurierte Zusammenstellung, die mehrere Parameter und/oder Einstellungen für den Betrieb des Zugangssicherheitsystems aufweisen, umfassen. Eine derartige Zusammenstellung kann auch als Template bezeichnet werden. Das Template kann mehrere Parameter umfassen. Die Parameter können z. B. für mehrere Zugangskomponenten des Zugangssicherheitssystems vorgesehen und aufeinander abgestimmt sein. Das Template kann z. B. Steuerungsdaten für Betriebsabläufe umfassen. Beispielsweise kann anhand der Steuerungsdaten festgelegt sein, in welcher Reihenfolge welche Zugangskomponente welche Handlung durchführt.

Die Information, die der Installateur in die Eingabevorrichtung eingibt, und die Steuerungsdaten für das Zugangssicherheitssystem betreffen, können somit zumindest einen Parameter und/oder ein Template betreffen.

Es kann vorgesehen sein, dass die Steuerungsdaten eine strikte Untergruppe von Steuerungsdaten sind, die für das Zugangssicherheitssystem, insbesondere über einen auf einem Personal Computer installierten Inbetriebnahmesoftware, eingestellt werden können. Beispielsweise kann auf einem Personal Computer mittels einer Inbetriebnahmesoftware eine Vielzahl von Parameter eingestellt werden. Ebenfalls kann es sein, dass mit der Inbetriebnahmesoftware mehrere Templates ausgewählt werden können. Ebenfalls ist es denkbar, dass eine Zusammenstellung von Parameter und/oder Einstellungen, d. h. ein Template, mittels der Inbetriebnahmesoftware zusammengestellt werden kann.

Bevorzugt dient das Inbetriebnahmegerät dazu, nur einen oder mehrere ausgewählten Parameter der Vielzahl der mittels der Inbetriebnahmesoftware einstellbaren Parameter einzustellen. Zusätzlich oder alternativ dient das Inbetriebnahmegerät nur einen oder mehrere der Vielzahl der mittels der Inbetriebnahmesoftware auswählbaren oder zusammenstellbaren Templates auszuwählen. Somit dient das Inbetriebnahmegerät dazu, häufig vorkommende Steuerungsdaten einzustellen. Seltene oder komplizierte Steuerungsdaten hingegen lassen sich nicht mittels des Inbetriebnahmegeräts einstellen. Somit bedeutet eine strikte Untergruppe, dass es Steuerungsdaten gibt, die sich mittels der Inbetriebnahmesoftware einstellen lassen, aber nicht mittels des Inbetriebnahmegeräts. Zumindest gibt es Steuerungsdaten, die zuvor mittels des Personal Computers an das Inbetriebnahmegerät übertragen werden müssten. Somit ist das Inbetriebnahmegerät insbesondere für Installateure geeignet, die einfache oder wiederkehrende Handlungen vornehmen wollen.

Die elektronischen Daten, die mittels des zweiten Kommunikationskanals an das Mobilgerät transferiert werden und die Daten zur Auswahl und/oder zum freien Eingeben und/oder zur Bestätigung mittels einer Eingabevorrichtung des Mobilgeräts betreffen, sind bevorzugt in dem in dem nicht flüchtigen Speicher des Inbetriebnahmegeräts gespeichert worden. Die elektronischen Daten zum freien Eingeben können beispielsweise ein entsprechendes Eingabefeld auf der Benutzeroberfläche generieren. Die Speicherung ist bevorzugt vor der Einrichtung des ersten Kommunikationskanals erfolgt. D. h. der Installateur kommt zu dem Zugangssicherheitssystem mit dem Inbetriebnahmegerät, das die Daten zur Auswahl und/oder zum freien Eingeben und/oder zur Bestätigung bereits enthält. Wie bereits in den obigen Absätzen geschildert, können diese Daten ein Template, d. h. eine vorkonfigurierte Zusammenstellung von Parameter und/oder Einstellungen, betreffen. Zusätzlich oder alternativ können diese Daten eine Eingabemaske, insbesondere zur Eingabe, Bestätigung oder Auswahl von Parameter, betreffen. Zusätzlich oder alternativ können diese Daten Erklärungen zu den einzugebenden Informationen umfassen, z. B. eine Erklärung zur Parametrierung und/oder zum Template.

Die elektronischen Daten, die vor der Einrichtung des ersten Kommunikationskanals in dem nicht flüchtigen Speicher des Inbetriebnahmegeräts gespeichert worden sind, können somit Informationen zur Inbetriebnahme des Zugangssicherheitssystems, insbesondere zumindest eine vorkonfigurierte Zusammenstellung von Parameter und/oder Einstellungen und/oder Erklärungen zur Parametrierung und/oder eine Eingabemaske betreffen.

Zusätzlich oder alternativ können die elektronischen Daten, die in dem nicht flüchtigen Speicher vor der Einrichtung des ersten Kommunikationskanals gespeichert worden sind, Daten zur Installation des Zugangssicherheitssystems betreffen. Beispielsweise können die elektronischen Daten einen Kabelplan betreffen.

Die elektronischen Daten, die vor der Herstellung des ersten Kommunikationskanals in dem Inbetriebnahmegerät gespeichert worden sind, können von einer Recheneinheit des Herstellers des Zugangssicherheitssystems in das Inbetriebnahmegerät transferierbar, insbesondere herunterladbar, sein.

Es kann sein, dass zumindest ein Teil der elektronischen Daten in dem Inbetriebnahmesoftware auf dem Personal Computer zusammengestellt worden sind. Beispielsweise ist es denkbar, dass eine Zusammenstellung von Parameter und/oder Einstellungen, d. h. ein Template, mittels des Inbetriebnahmesoftwares zusammengestellt worden ist. Dieses Template wird an das Inbetriebnahmegerät transferiert.

Das Transferieren der elektronischen Daten zu dem Inbetriebnahmegerät kann insbesondere kabellos, z. B. über WLAN, erfolgen.

Es kann sein, dass das Inbetriebnahmegerät ohne eine eigene elektrischen Energiequelle, insbesondere ohne eine Batterie oder einen Akkumulator, ausgebildet ist. Daher kann es notwendig sein, dass das Inbetriebnahmegerät an eine externe Stromquelle angeschlossen ist, um Daten transferieren zu können. Beispielsweise kann über das Inbetriebnahmegerät über die erste Zugangskomponente an eine externe Stromquelle, z. B. an das Stromnetz, angeschlossen sein.

Vor der Herstellung des ersten Kommunikationskanals kann das Inbetriebnahmegerät z. B. über den Personal Computer an die externe Stromquelle, insbesondere das Stromnetz, angeschlossen sein.

Wie bereits oben beschrieben, kann das Inbetriebnahmegerät vor allem bei einfachen und/oder wiederkehrenden Aufgaben den Installateur unterstützen. Somit kann vorgesehen sein, dass nacheinander mittels des Inbetriebnahmegeräts ein Transferieren von denselben Steuerungsdaten an mehrere Zugangssicherheitssysteme oder mehrere Zugangskomponenten erfolgt.

Zum nacheinander Transferieren derselben Steuerungsdaten können die folgenden Verfahrensschritte vorgesehen sein, die insbesondere von dem Inbetriebnahmegerät durchgeführt werden:
- Einrichten eines drahtgebundenen Kommunikationskanals zwischen dem Inbetriebnahmegerät mit einer kabelgebundenen Kommunikationsschnittstelle einer Zugangskomponenten eines weiteren Zugangssicherheitssystems nach Beendigung des ersten Kommunikationskanals,
- Transferieren derselben Steuerungsdaten über den drahtgebundenen Kommunikationskanal an die Zugangskomponente des weiteren Zugangssicherheitssystems.

Zusätzlich oder alternativ kann vorgesehen sein, dass ein Transferieren von denselben Steuerungsdaten an verschiedene Zugangskomponenten desselben Zugangssicherheitssystems erfolgt. In diesem Fall wird nach Beendigung des ersten Kommunikationskanals ein drahtgebundener Kommunikationskanal mit einer Kommunikationsschnittstelle einer weiteren Zugangskomponente des Zugangssicherheitssystems eingerichtet und dieselben Steuerungsdaten über den drahtgebundenen Kommunikationskanal an die weitere Zugangskomponente des Zugangssicherheitssystems transferiert.

Insbesondere erfolgt ein Transferieren derselben Daten an die Zugangskomponente des weiteren Zugangssicherheitssystems bzw. der weiteren Zugangskomponenten des Zugangssicherheitssystems ohne Einrichten eines Kommunikationskanals mit dem Mobilgerät. Somit wird nur beim ersten Mal mittels des Mobilgeräts festgelegt, welche elektronische Daten an die Zugangskomponente transferiert werden sollen. Danach ist es nicht mehr notwendig, wiederholt dieselben Information, die Steuerungsdaten betreffen, in der Eingabevorrichtung einzugeben.

Es kann vorgesehen sein, dass das Inbetriebnahmegerät einen Taster oder einen Schalter umfasst. Der Schalter oder der Taster kann dazu dienen, die elektronischen Daten an die Zugangskomponente des weiteren Zugangssicherheitssystems bzw. der weiteren Zugangskomponenten des Zugangssicherheitssystems zu transferieren. Hierbei kann vorgesehen sein, dass der Verfahrensschritt des Transferierens der elektronischen Daten vorgenommen wird, nachdem ein elektrisches Signal, das durch die Betätigung eines Tasters des Inbetriebnahmegeräts erzeugt worden ist, durch die Elektronikvorrichtung des Inbetriebnahmegeräts detektiert worden ist. Der Installateur muss nach der Herstellung des weiteren drahtgebundenen Kommunikationskanals mit einer weiteren Zugangskomponente somit nicht mehr Parameter oder Templates auf der Eingabevorrichtung auswählen. Vielmehr genügt es, mittels eines Druckes auf den Taster oder Schalter des Inbetriebnahmegeräts das Transferieren der Steuerungsdaten zu veranlassen.

Das Verfahren kann auch Schritte enthalten, die von den Zugangssicherheitssystem und/oder dem Installateur durchgeführt werden. Insbesondere muss sichergestellt werden, dass der Aufbau des Zugangssicherheitssystems, der auf der Anzeigevorrichtung angezeigt wurde, der Realität entspricht und/oder dass die transferierten Steuerungsdaten zu einer korrekten Steuerung des Zugangssicherheitssystems führen.

Somit kann das Verfahren bevorzugt die folgenden Schritte, ausgeführt von dem Zugangssicherheitssystem, umfassen:
- Senden eines Befehls von der interagierbaren Zugangskomponente an den Aktor
- Öffnen und/oder Entriegeln der Zugangsbarriere durch den Aktor.

Der Befehl kann insbesondere über den Datenbus gesendet werden.

Vor dem Senden des Befehls hat bevorzugt der Installateur mit der interagierbaren Zugangskomponenten interagiert, z. B. hat der Installateur den Schalter oder Taster gedrückt oder hat sich in den Erfassungsbereich des Sensors begeben. Bevorzugt werden hierdurch von dem Installateur und/oder von dem Zugangssicherheitssystem die transferierten Steuerungsdaten überprüft. Zusätzlich oder alternativ wird von dem Installateur die auf der Anzeigevorrichtung angezeigten charakteristischen Merkmale verifiziert.

Insbesondere kann das Zugangssicherheitssystem als Fluchtwegssicherheitssystem ausgebildet sein. Somit umfasst das Zugangssicherheitssystem einen Nottaster als interagierbare Zugangskomponente und einen elektromagnetische Türverriegelung als Aktor.

Nach dem Ausnutzen des ersten und des zweiten Kommunikationskanals wird nun die Fluchtwegsfunktion des Fluchtwegsicherheitssystems überprüft. Hierzu betätigt der Installateur den Nottaster. Daraufhin sendet der Nottaster einen Entriegelungsbefehl an die Türverriegelung. Der Entriegelungsbefehl kann insbesondere über einen Datenbus erfolgen. Nach dem Empfang des Entriegelungsbefehls entriegelt die Türverriegelung, was durch den Installateur überprüft wird. Die Entriegelung erfolgt insbesondere durch ein Abschalten einer Stromversorgung eines Elektromagneten.

Der Installateur kann einen Parameter mittels des ersten und des zweiten Kommunikationskanals eingestellt haben, beispielsweise die Zeitdauer einer Entriegelung, bevor z. B. der Elektromagnet der Türverriegelung erneut bestromt wird. Der Installateur interagiert mit der Zugangskomponente, durch die eine Entriegelung erfolgt, z. B. einen Schlüsselschalter oder ein anderes Zugangskontrollgerät. Nach Betätigung der Zugangskomponente, durch die eine Entriegelung erfolgt, wird direkt oder indirekt ein Befehl an die Türverriegelung zur Entriegelung gesendet, woraufhin die Türverriegelung entriegelt. Der Installateur misst die Zeitdauer der Entriegelung und verifiziert damit den eingestellten Parameter.

Das Verfahren kann auch Schritte enthalten, die von dem Mobilgerät durchgeführt werden. So kann das Verfahren zumindest den Schritt, ausgeführt von dem Mobilgerät, umfassen:
- Empfang von elektronischen Daten von dem Inbetriebnahmegerät über den zweiten Kommunikationskanal,
- Anzeigen von Informationen basierend von den elektronischen Daten auf einer Anzeigevorrichtung des Mobilgeräts.

Bei den Informationen kann es sich um die zuvor genannten Informationen handeln, nämlich Informationen zum Aufbau des Zugangssicherheitssystem, insbesondere zumindest ein charakteristisches Merkmal einer Busadresse oder einer UID oder einer Art oder einer Funktion zumindest einer der Zugangskomponenten, bevorzugt mehrerer der Zugangskomponenten, besonders bevorzugt aller Zugangskomponenten, die mit dem Datenbus verbunden sind. Die Informationen können nach unterschiedlichen Türen gruppiert angezeigt werden.

Die Daten können Daten zur Darstellung einer Benutzeroberfläche, insbesondere einer Eingabemaske umfassen. Die Daten können Steuerungsdaten zur Auswahl oder Bestätigung umfassen.

Das Verfahren kann des Weiteren den folgenden Schritt, der von dem Mobilgerät ausgeführt wird, umfassen:
- Transferieren elektronischer Daten mittels des zweiten Kommunikationskanals, wobei die elektronischen Daten auf von einem Installateur in das Mobilgerät eingegebenen Informationen basieren und Steuerungsdaten für das Zugangssicherheitssystem betreffen.

Bei den Steuerungsdaten kann es sich um zumindest einen Parameter und/oder zumindest ein Template handeln.

Das Inbetriebnahmegerät kann ein Kabel zur Herstellung des ersten Kommunikationskanals umfassen.

Die erste Zugangskomponente kann einem Steuergerät des Zugangssicherheitssystem entsprechen. Die Steuerungsdaten, die die Zugangskomponente über den ersten Kommunikationskanal empfängt, können in einem elektronischen Speicher des Steuergeräts gespeichert werden. Es kann sein, dass das Steuergerät die Steuerungsdaten zur Steuerung des Zugangssicherheitssystems verwendet.

Es kann vorgesehen sein, dass die Kommunikationsschnittstelle der ersten Zugangskomponente, die zur Bildung des ersten Kommunikationskanals dient, hinter einer Abdeckung der ersten Zugangskomponente angeordnet ist. Bevorzugt ist die Kommunikationsschnittstelle der ersten Zugangskomponente, die zur Bildung des ersten Kommunikationskanals dient, im Inneren eines Gehäuses der ersten Zugangskomponente angeordnet ist. Hierdurch ist es nicht möglich, ohne Abnahme der Abdeckung, insbesondere Öffnen des Gehäuses, zu der Kommunikationsschnittstelle zu gelangen.

Bevorzugt ist das Gehäuse und/oder die Abdeckung durch einen Sabotagekontakt und/oder durch ein Zugangskontrollgerät geschützt. Somit löst das Entfernen der Abdeckung, insbesondere das Öffnen des Gehäuses, einen Alarm aus. Ein Installateur muss insbesondere eine Berechtigung vorweisen, um den Alarm zu quittieren. Hierdurch wird verhindert, dass ein unberechtigter Benutzer ein Inbetriebnahmegerät an die Kommunikationsschnittstelle anschließen kann.

Die erste Zugangskomponente, insbesondere das Steuergerät, kann ausgebildet sein, in einem Funktionsraum oder innerhalb einer Gebäudekonstruktion, beispielsweise einer Zwischendecke, angeordnet zu werden. Somit kann es sein, dass die erste Zugangskomponente entfernt von einer Zugangsbarriere, an der zumindest eine weitere Zugangskomponente des Zugangssicherheitssystems angeordnet ist oder zur Anordnung vorgesehen ist, angeordnet oder zur Anordnung vorgesehen ist.

Die Aufgabe der Erfindung wird auch durch eine Inbetriebnahmegerät wie offenbart gelöst. Das Inbetriebnahmegerät kann Verfahrensschritte, wie im Rahmen dieser Offenbarung beschrieben, ausführen. Das Inbetriebnahmegerät kann, wie im Rahmen dieser Offenbarung beschrieben, ausgebildet sein.

Die Aufgabe der Erfindung wird auch gelöst durch ein Inbetriebnahmesystem, das das Zugangssicherheitssystem und das Inbetriebnahmegerät umfasst. Bevorzugt umfasst das Inbetriebnahmesystem das Mobilgerät. Das Inbetriebnahmesystem kann den Personal Computer mit der Inbetriebnahmesoftware umfassen. Das Zugangssicherheitssystem kann zur Durchführung von Verfahrensschritte, wie im Rahmen dieser Offenbarung beschrieben, ausgebildet sein. Das Inbetriebnahmesystem kann, wie im Rahmen dieser Offenbarung beschrieben, ausgebildet sein.

Die Erfindung wird nun anhand eines Ausführungsbeispiels näher beschrieben. Gleiche Bezugszeichen zeigen dabei gleiche Elemente. Es zeigen:
Fig. 1 ein erstes Ausführungsbeispiel eines erfindungsgemäßen Inbetriebnahmesystems,
Fig. 2 ein Ausschnitt aus dem Inbetriebnahmesystem der Figur 1,
Figur 3 eine Bildschirmansicht eines Mobilgeräts des Inbetriebnahmesystems der Figur 1,
Figur 4 ein erfindungsgemäßes Verfahren
Figur 5 ein zweites Ausführungsbeispiel eines erfindungsgemäßen Inbetriebnahmesystems und
Figur 6 ein Steuergerät des Inbetriebnahmesystems der Figur 5.

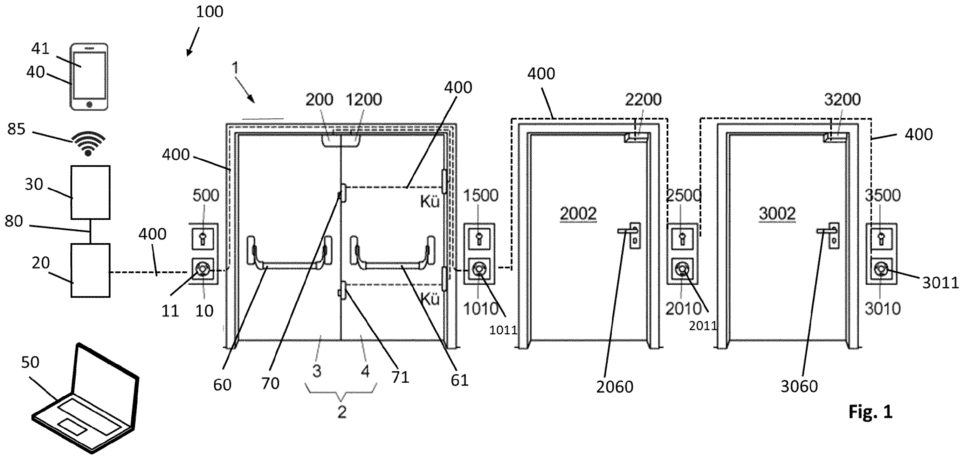

In Figur 1 ist ein erfindungsgemäßes Inbetriebnahmesystem 100 dargestellt. Das Inbetriebnahmesystem 100 umfasst ein Zugangssicherheitssystem 1. Das Zugangssicherheitssystem 1 ist dazu vorgesehen, an mehrere Zugangsbarrieren 2, 2002, 3002 angeordnet zu werden. Hierbei sind die Zugangsbarrieren als Türen 2, 2002, 3002 ausgebildet. Die Türen 2002, 3002 können einflügelig ausgebildet sein, wie es bei den Türen 2002, 3002 der Fall ist, oder zweiflügelig, wie es bei der Tür 2 der Fall ist. Die zweiflügelige Tür 2 umfasst zwei Türblätter 3,4 als Standflügel 3 und als Gangflügel 4.

Das Zugangssicherheitssystem 1 umfasst mehrere Aktoren in Form von elektromagnetischen Türverriegelungen 200, 1200, 2200, 3200. Das Zugangssicherheitssystem 1 umfasst mehrere Nottaster 10, 1010, 2010, 3010 als interagiernde Zugangskomponenten. Die Nottaster 10, 1010, 2010, 3010 können von jedem Benutzer betätigt werden. Hieraufhin wird über einen Datenbus 400 die entsprechende Türverriegelung bzw. Türverriegelungen 200, 1200, 2200, 3200 entriegelt. Hierdurch wird auch, ohne dass ein Benutzer berechtigt ist, die entsprechende Tür 2, 2002, 3002 elektrisch entriegelt. Ein Benutzer kann nun durch Drücken einer Panikstange 60, 61 oder Betätigung eines Türgriffs 2060, 3060 fliehen. Somit das Zugangssicherheitssystem 1 als Fluchtwegssicherheitssystem ausgebildet.

Bei Betätigung der Panikstange 60, 61 oder des Türgriffs 2060, 3060 werden ein oder mehrere Schlösser 70, 71 entriegelt, so dass auch mechanisch die Tür 2, 2002, 3002 öffenbar wird. Auch in den Türen 2002, 3002 sind Schlösser eingebaut, die in Figur 1 jedoch nicht dargestellt sind. Die Schlösser 70, 71 sind mechanisch entriegelbar. Es kann jedoch sein, dass die Schlösser 70, 71 zusätzlich elektrisch entriegelbar sind.

Wird einer der Nottaster 10, 1010, 2010, 3010 betätigt, so wird ein Alarm ausgelöst.

Die Entriegelung der Türverriegelungen 200, 1200, 2200, 3200 erfolgt durch ein Abschalten einer Stromversorgung eines Elektromagneten der Türverriegelung 200, 1200, 2200, 3200.

Das Zugangssicherheitssystem 1 umfasst ein Steuergerät 20.

Das Zugangssicherheitssystem 1 umfasst Zugangskontrollgeräte 500, 1500, 2500, 3500. Im vorliegenden Ausführungsbeispiel sind die Zugangskontrollgeräte 500, 1500, 2500, 3500 als Schlüsseltaster ausgebildet. Die Zugangskontrollgeräte 500, 1500, 2500, 3500 dienen u. a. dazu, dass ein berechtigter Benutzer die Türverriegelung 200, 1200, 2200, 3200 entriegeln kann, ohne einen Alarm auszulösen. Der berechtigte Benutzer kann seine Berechtigung an dem Zugangskontrollgerät 500, 1500, 2500, 3500 nachweisen, woraufhin die entsprechende Türverriegelung 200, 1200, 2200, 3200 entriegelt wird. Nach einer in dem Steuergerät 20 hinterlegten Entriegelungszeit wird jedoch der Elektromagnet wieder bestromt, so dass im geschlossenen Zustand der Tür 2, 2002, 3002 die Tür 2, 2002, 3002 wieder elektrisch verriegelt ist.

Die Kommunikation innerhalb des Zugangssicherheitssystems 1 erfolgt über den Datenbus 400. D. h. über den Datenbus 400 informiert der Nottaster 10, 1010, 2010, 3010 die Türverriegelungen 200, 1200, 2200, 3200, dass der Nottaster 10, 1010, 2010, 3010 betätigt worden ist. Die Türverriegelungen 200, 1200, 2200, 3200 können anhand der Busadresse des Nottasters 10, 1010, 2010, 3010 jeweils erkennen, ob die Türverriegelung 200, 1200, 2200, 3200 an derselben Tür 2, 2002, 3002 angeordnet ist wie der Nottaster 10, 1010, 2010, 3010, der über seine Betätigung informiert. Beispielsweise ist eine entsprechende Zuordnung in der Türverriegelung 200, 1200, 2200, 3200 hinterlegt. Nur die Türverriegelung bzw. Türverriegelungen 200, 1200, 2200, 3200 an derselben Tür 2, 2002, 3002 werden entriegelt.

Die Zuordnung erfolgt durch das Einstellen von DIP-Schaltern an den Nottastern 10, 1010, 2010, 3010 und an den Türverriegelungen 200, 1200, 2200, 3200. Zudem wird die Anzahl der Türen in dem Steuergerät 20 hinterlegt. Zumindest jeweils die Nottaster 10, 1010, 2010, 3010 und die Türverriegelungen 200, 1200, 2200, 3200 mit denselben DIP-Schalterstellungen sind einander zugeordnet. Bei der zweiflügeligen Tür 2 ist zudem auch der Nottaster 10, 1010 des anderen Türflügels 3, 4 den Türverriegelungen 200, 1200 zugeordnet. Die DIP-Schalter werden bei der Inbetriebnahme eingestellt.

Die Schlösser 70, 71 sind ebenfalls Teilnehmer des Datenbusses 400. Die Zugangskontrollgeräte 500, 1500, 2500, 3500 können Teilnehmer des Datenbusses 400 sein, oder auch über eine eigene Kommunikationsleitung mit einer Zugangskomponente des Zugangssicherheitssystems 1 informationstechnisch verbunden sein. Im vorliegende Beispiel sind die Zugangskontrollgeräte 500, 1500, 2500, 3500 über eine eigene Kommunikationsleitung mit den Nottastern 10, 1010, 2010, 3010 verbunden.

Die Information, dass der Nottaster10, 1010, 2010, 3010 betätigt worden ist, ist nur ein Beispiel für eine Kommunikation über den Datenbus 400. Weitere Beispiele der Kommunikation sind eine Authentifizierung an dem Zugangskontrollgerät 500, 1500, 2500, 3500, Statustelegramme oder eine Kommunikation, die es ermöglicht, dass Türen 2, 2002, 3002 als Schleuse fungieren.

Ein Teil der Steuerung des Zugangssicherheitssystems 1 wird mittels des Steuergeräts 20 durchgeführt. Das Steuergerät 20 ist in dem ersten Ausführungsbeispiel der Figur 1 in einem Funktionsraum, entfernt von den Türen 2, 2002, 3002, angeordnet. Das Steuergerät 20 ist Teilnehmer des Datenbusses 400. Beispielsweise kann die Entriegelungszeit für jede der Türverriegelungen 200, 1200, 2200, 3200 in dem Steuergerät elektronisch hinterlegt sein.

Das Steuergerät 20, die Türverriegelungen 200, 1200, 2200, 3200, die Nottaster 10, 1010, 2010, 3010, die Zugangskontrollgeräten 500, 1500, 2500, 3500 und die Schlösser 70, 71 sind Zugangskomponenten des Zugangssicherheitssystems 1.

Damit eine Kommunikation der Busteilnehmer des Datenbusses 400 funktioniert, müssen die Funktionen der Busteilnehmer des Datenbusses 400 festgelegt sein. Hierzu gehört die Art des Busteilnehmers (z. B. Nottaster, Türverriegelung, Schloss) als auch die Zuordnung zueinander bzw. zu einer Tür 2, 2002, 2003.

Die Nottaster 10, 1010, 2010, 3010 umfassen jeweils eine Anzeige, hier in Form eines Leuchtrings 10, 1011, 2011, 3011. Der Leuchtring 10, 1011, 2011, 3011 umfasst jeweils mehrere LEDs, die in unterschiedlichen Farben leuchten können. Bei einer Inbetriebnahme kann mittels der Leuchtringe 10, 1011, 2011, 3011 die korrekte Zuordnung der Zugangskomponenten 10, 1010, 2010, 3010, 200, 1200, 2200, 3200, 70, 71 untereinander optisch von einem Installateur überprüft werden. Allerdings kann an jedem Leuchtring 10, 1011, 2011, 3011 nur die korrekte Zuordnung der Zugangskomponenten jeweils einer Tür 2, 2002, 2003 erfasst werden. Möchte sich der Installateur von der korrekten Zuordnung anhand der Leuchtringe 10, 1011, 2011, 3011 überzeugen, so muss der Installateur von Tür zu Tür gehen.

Eine Möglichkeit, Parameter, wie z. B. die Entriegelungszeit, einzustellen, ist dadurch gegeben, dass ein Personal Computer 50 direkt an das Steuergerät 20 mittels eines Kabels angeschlossen werden kann (nicht dargestellt). Auf dem Personal Computer 50 kann eine Inbetriebnahmesoftware geöffnet werden und die Parametereinstellung vorgenommen und mittels des Kabels an das Steuergerät 20 übertragen werden. Dieses ist auf der Baustelle umständlich.

Hier setzt die Erfindung an und schafft eine weitere Möglichkeit, die korrekte Funktionen zu überprüfen und/oder Parameter an das Steuergerät 20 zu übertragen.

Erfindungsgemäß ist eine Zugangskomponente, insbesondere das Steuergerät 20, mit einem Inbetriebnahmegerät 30 des Inbetriebnahmesystems 100 drahtgebunden kommunikationstechnisch über einen ersten Kommunikationskanal 80 verbunden. Zusätzlich ist das Inbetriebnahmegerät 30 mit einem Mobilgerät 40 kommunikationstechnisch drahtlos über einen zweiten Kommunikationskanals 85 verbunden. Dadurch, dass zumindest in Teil der Kommunikation kabellos erfolgt, ist der Installateur freier in seiner Arbeitsweise. Dadurch, dass aber durch das Inbetriebnahmegerät 30 und nicht durch das Steuergerät 20 ein kabelloser zweiter Kommunikationskanal 85 eingerichtet wird, ist die kabellose Kommunikation auf die Zeit der Inbetriebnahme beschränkt. Der Installateur nimmt hierbei das Inbetriebnahmegerät 30 nach Beenden der Inbetriebnahme mit und beendet den ersten Kommunikationskanal. Hierdurch wird einer Manipulation des Zugangssicherheitssystems vorgebeugt. Wird als Mobilgerät 40 ein Mobiltelefon oder ein Tablet verwendet, so ist die Arbeit für den Installateur besonders komfortabel.

Das Mobilgerät 40 umfasst eine Anzeigevorrichtung und eine Eingabevorrichtung. In dem dargestellten Ausführungsbeispiel der Figur 1 ist beides durch einen berührungssensitiven Bildschirm 41 realisiert.

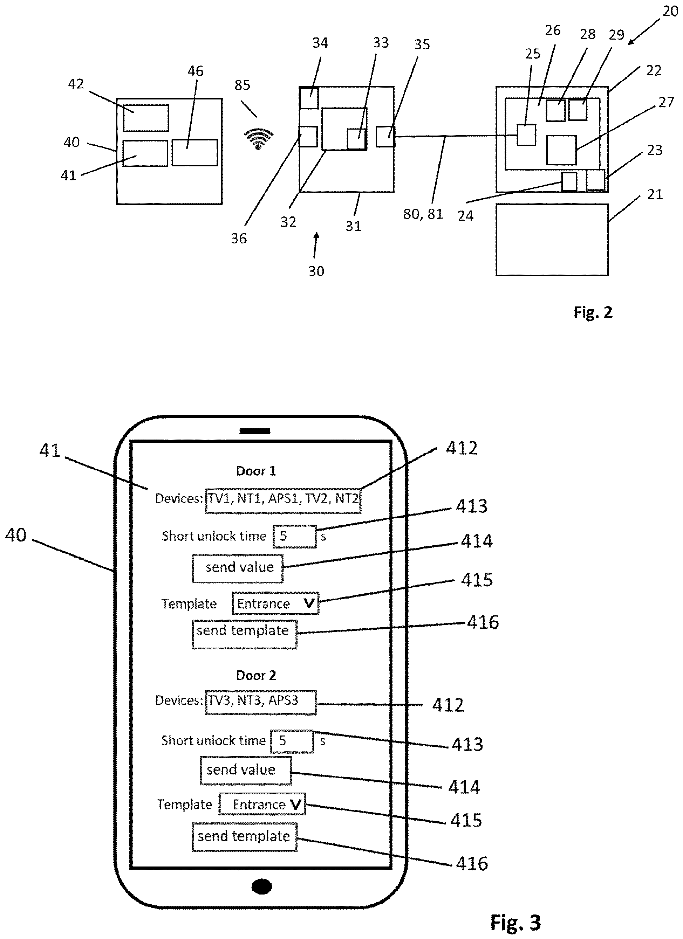

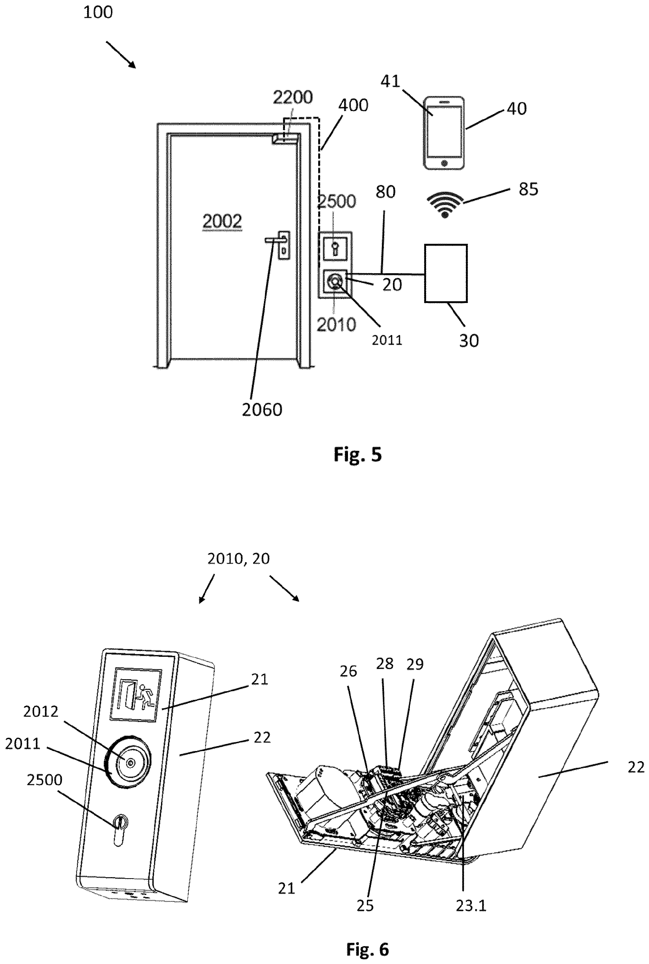

Figur 2 zeigt eine schematische Darstellung der Steuergeräts 20, des Inbetriebnahmgeräts 30 und des Mobilgeräts 40 der Figur 1. In Figur 6 ist ein Steuergerät 20 detaillierter dargestellt.

Das Steuergerät 20 umfasst ein Gehäuse mit einer Abdeckung 21 und einem Gehäusegrundkörper 22.

Das Steuergerät ist in Figur 2 in einem geöffneten Zustand dargestellt. Eine Kommunikationsschnittstelle 25 für die erste drahtgebundenen Kommunikationsverbindung 80 ist im Inneren des Gehäuses angeordnet. Die Schnittstelle 25 kann sich z. B. auf einer Platine 26 befinden. Hierbei kann es sich z. B. um einen USB-Anschluss, einen RS 232- oder einen RS 485-Anschluss handeln.

In Figur 2 ist die Abdeckung 21 des Steuergeräts 20 von dem Gehäusegrundkörper 22 des Steuergeräts 20 abgenommen oder aufgeklappt worden. Bei einem Abnehmen oder Aufklappen der Abdeckung 21 wird ein Sabotageschalter 23 betätigt. Hierdurch wird ein Alarm mittels einer Alarmvorrichtung 24 generiert. Der Alarm kann durch eine Authentifizierung beendet werden.

Das Steuergerät 20 umfasst einen oder mehrere Controller 27, mit denen das Zugangssicherheitssystem 1 zumindest teilweise gesteuert wird. Das Steuergerät 20 kann einen Busanschluss 28 an den Datenbus 400 umfassen. Hierdurch kann das Steuergerät 20 Steuerbefehle über den Datenbus 400 senden.

Das Steuergerät 20 umfasst einen Stromanschluss 29 an eine elektrische Energieversorgung. Hierdurch wird das Steuergerät 20 mit elektrischem Strom versorgt. Beispielsweise können der Busanschluss 28, der Stromanschluss 29 und/oder der mindestens eine Controller 27 auf der Platine 26 angeordnet sein.

Das Inbetriebnahmegerät 30 wird über das Steuergerät 20 mit elektrischer Energie versorgt. Dieses kann insbesondere über den drahtgebundenen ersten Kommunikationskanal 80 erfolgen. Alternativ und nicht dargestellt kann das Inbetriebnahmegerät 30 über ein weiteres Kabel mit dem Steuergerät verbunden sein, um das Inbetriebnahmegerät 30 mit elektrischen Strom zu versorgen.

Das Inbetriebnahmegerät 30 umfasst ein Gehäuse 31. In dem Gehäuse 30 ist ein Controller 32 mit einem nicht flüchtigen Speicher 33 als Elektronikvorrichtung angeordnet.

Das Inbetriebnahmegerät 30 umfasst eine drahtgebundene Schnittstelle 35, um den ersten Kommunikationskanal 80 zu bilden. Die drahtgebundene Schnittstelle 35 kann z. B. als USB Anschluss, als RS 232 oder einen RS 485-Anschluss ausgebildet sein. Die drahtgebundene Schnittstelle 35 dient zudem der Versorgung des Inbetriebnahmegeräts 30 mit elektrischer Energie. Alternativ und nicht darstellt kann eine separate Steckverbindung zur Versorgung des Inbetriebnahmegeräts 30 mit elektrischer Energie vorgesehen sein.

Der drahtgebundene Kommunikationskanal 80 wird mittels eines Kabels 81 zwischen dem Inbetriebnahmegerät 30 und dem Steuergerät 20 hergestellt.

Das Inbetriebnahmegerät 30 umfasst eine Sende- und Empfangsvorrichtung 36, mit der eine kabellose Verbindung zu dem Mobilgerät 40 hergestellt werden kann.

Das Inbetriebnahmegerät 30 kann es Weiteren einen Taster 34 umfassen, der von einem Installateur betätigbar ist. Hierdurch kann der Installateur mit der Elektronikvorrichtung 32 des Inbetriebnahmegeräts 30 ohne zur Hilfenahme des Mobilgeräts 40 interagieren.

Das Mobilgerät 40 entspricht einem handelsüblichen Smartphone oder Tablet. Das Mobilgerät 40 umfasst einen berührungssensitiven Bildschirm 41 als Eingabevorrichtung und als Ausgabevorrichtung. Das Mobilgerät 40 umfasst eine Sende- und Empfangsvorrichtung 46, mit der die kabellose Verbindung zu dem Inbetriebnahmegerät 30 hergestellt werden kann. Das Mobilgerät 40 umfasst des Weiteren einen Controller 42.

Der kabellose Kommunikationskanal 85 entspricht einem lokalen Kommunikationskanal, ohne Einbindung des World-Wide-Webs. Die Kommunikation erfolgt über WLAN.

Das Mobilgerät 40 benötigt einen handelsüblichen Webbrowser, um mit dem als Web-Server ausgebildeten Inbetriebnahmegeräts 30 zu interagieren. Das Mobilgerät 40 dient somit im Wesentlichen nur als Schnittstelle zu dem Installateur, damit der Installateur auf dem Bildschirm 41 Informationen über das Zugangssicherheitssystem 1 überprüfen und/oder Steuerungsinformationen auf dem Bildschirm für das Zugangssicherheitssystem 1 eingeben kann. Hierzu muss von dem Mobilgerät 40 aus eine vom Inbetriebnahmegerät 30 gehostete Webseite aufgerufen werden.

Das Inbetriebnahmegerät 30 verarbeitet elektronische Daten, die das Inbetriebnahmegerät 30 von dem Steuergerät 20 empfängt, damit der Installateur die in den empfangenen elektronischen Daten vorhandenen Informationen optisch aufnehmen und überprüfen kann. Das Inbetriebnahmegerät 30 verarbeitet elektronische Daten, die das Inbetriebnahmegerät 30 von dem Mobilgerät 40 empfängt, um die Daten an das Steuergerät 20 derart weiterzuleiten, damit das Zugangssicherheitssystem 1 die elektronischen Daten im Betrieb des Zugangssicherheitssystems verwenden kann.

Die Kommunikationsverbindung zwischen dem Mobilgerät 40 und dem Steuergerät 20 über den ersten und den zweiten Kommunikationskanal 80, 85 dient dazu, den Aufbau des Zugangssicherheitssystems 1 für den Installateur darzustellen. Figur 3 zeigt eine Bildschirmansicht des Mobilgeräts 40.

Auf dem Bildschirm 41 ist eine Benutzeroberfläche mit einer Eingabemaske dargestellt, die das Mobilgerät 40 von dem Inbetriebnahmegerät 30 herunntergeladen hat. Hierzu stellt das Inbetriebnahmegerät 30 eine Webseite für das Mobilgerät 40 bereit.

Die Ansicht auf der Benutzeroberfläche ist nach Türblättern aufgeteilt, die als "Door 1" und "Door 2" bezeichnet sind. Diese beiden Türblätter entsprechen zwei Türen 2, 2002 der drei Türen 2, 2002, 3002 des Zugangssicherheitssystems 1. Unterhalb der jeweiligen Türblattbezeichnung "Door 1" bzw. "Door 2" schließt sich jeweils ein Feld 412 an, das mit "Device" beschrieben ist und in dem die an den Datenbus 400 angeschlossenen und den Türen 2, 2002 zugeordneten Zugangskomponenten 10, 70, 71, 200, 1200, 1010 aufgelistet sind. Die Zugangskomponenten 10, 70, 71, 200, 1200, 1010 sind durch Kommata voneinander getrennt. Die Zugangskomponenten 10, 70, 71, 200, 1200, 1010 sind in der Auflistung durch Buchstabenabkürzungen bezeichnet, die die Art der Zugangskomponente 10, 70, 71, 200, 1200, 2200, 3200, 1010, 2010, 3010 wiedergibt. "TV" für Türverriegelung 200, 1200, 2200, 3200, "NT" für Nottaster 10, 1010, 2010, 3010 und "APS" für Antipanikschloss, d. h. für die Schlösser 70, 71, die gemeinsam von einem der Schlösser 70, 71 aus gesteuert werden und somit nur als ein Busteilnehmer agieren.

Ferner sind die Zugangskomponenten 10, 70, 71, 200, 1200, 1010 sind in der Auflistung jeweils durch eine Zahl "1", "2" bzw. "3" gekennzeichnet. Die Zahl gibt an, welchem Türblatt 3, 4, 2002 die Zugangskomponente 10, 70, 71, 200, 1200, 1010 zugeordnet ist. Somit gibt die Zahl den Ort der Zugangskomponenten 10, 70, 71, 200, 1200, 1010 an. Insgesamt ist hierdurch die Funktion der Türkomponenten 10, 70, 71, 200, 1200, 1010 vollständig festgelegt.

Im vorliegenden Fall erfolgt die Zuordnung zu einem Türblatt 3, 4, 2002, 3002 durch Einstellung der mehreren DIP-Schalter. Zugangskomponenten 1010, 70, 71, 1200, die jeweils die DIP-Schalterstellungen für das Türblatt 4 erhalten haben, zeigen diese DIP-Schalterschalterstellungen durch eine "1" hinter der Buchstabenabkürzung für die Funktion an. "TV1" bedeutet z. B. die Türverriegelung 1200 für das Türblatt 4. "NT2" bedeutet entsprechend der Nottaster 10, der dem Türblatt 3 zugeordnet ist. TV3 bezeichnet entsprechend de Türverriegelung 2200 für die Tür 2002. Je nachdem, wie groß der Bildschirm 41 und das Zugangssicherheitssystem 1 ist, können alle Zugangskomponenten 10, 70, 71, 200, 1200, 2200, 3200, 1010, 2010, 3010 auf einer Bildschirmansicht oder nacheinander auf mehreren Bildschirmansichten dargestellt werden. In diesem Fall sind nur die Zugangskomponenten der zwei der drei Türen 2, 2002, 3002 auf einer Bildschirmansicht dargestellt.

Der Installateur kann nun auf dem Bildschirm 41 überprüfen, ob die Zugangskomponenten 10, 1010, 200, 1200, 70, 71, die den Türblättern 3, 4 zugeordnet sind und die an den Datenbus 400 angeschlossen sind, mit entsprechenden DIP-Schalterstellungen vorhanden sind. Entsprechend überprüft der Installateur auch, ob die Türkomponenten für die weiteren Türen 2002, 3002 vorhanden sind. Ob die korrekten DIP-Schalterstellungen an den zu den zugehörigen Türblättern 3, 4, 2002, 2003 Türkomponenten tatsächlich eingestellt sind, muss der Installateur hinterher an den Türen 2, 2002, 2003 überprüfen, aber der Installateur kann mittels des Inbetriebnahmegeräts 30 bereits in der Nähe des Steuergeräts 20 bereits erste Fehler erkennen, z. B. wenn eine Zugangskomponente 10, 70, 71, 200, 1200, 2200, 3200, 1010, 2010, 3010 nicht aufgelistet ist.

Um die Auflistung in den Felder 412 vornehmen zu können, erhält das Inbetriebnahmegerät 30 über den ersten Kommunikationskanal 80 elektronische Daten von dem Steuergerät 20. Die elektronischen Daten umfassen den Typ der an den Datenbus 400 angeschlossenen Zugangskomponenten 10, 70, 71, 200, 1200, 2200, 3200, 1010, 2010, 3010 und die DIP-Schalterstellungen der Zugangskomponenten 10, 70, 71, 200, 1200, 2200, 3200, 1010, 2010, 3010. Es kann beispielsweise sein, dass sowohl der Typ als auch die DIP-Schalterstellungen aus einer Busadresse der Zugangskomponenten herauslesbar sind, so dass es ausreicht, dass das Steuergerät 20 die Busadressen der Zugangskomponenten an das Inbetriebnahmegerät 30 zu transferieren. Das Inbetriebnahmegerät 30 verarbeitet die empfangenen elektronischen Daten und stellt die darin enthaltenen elektronischen Daten derart zusammen, dass sich für den Installateur die in der in Figur 3 gezeigten Bildschirmansicht ergibt. Die von dem Inbetriebnahmegerät 30 zusammengestellten elektronischen Daten werden über den zweiten Kommunikationskanal 85 an das Mobilgerät 40 transferiert.

Alternativ und nicht dargestellt kann anstelle der Felder 412 für die Türblätter 3, 4 jeweils ein Leuchtring 11, 1011, 2011 dargestellt werden, wobei die Segmente des Leuchtrings 11, 1011, 2011 jeweils derart leuchten, wie der Installateur es bei der Inbetriebnahme an den Türen 2, 2002 selber zu sehen bekommt. Hierbei erhält der Installateur durch die Farbgebung der auf dem Bildschirm 41 nachgestellten Leuchtringe dieselbe Information wie vor Ort durch die realen Leuchtringe 11, 1011, 2011. Diese Information entspricht im Wesentlichen der Information der Felder 412.

Der Installateur kann zusätzlich noch Steuerungsdaten für den Betrieb des Zugangssicherheitssystems 1 einstellen. Hierzu sind in der Bildschirmansicht, die in Figur 3 dargestellt ist, mehrere Eingabefelder 413, 414, 415, 416 dargestellt. Die Eingabefelder sind jeweils 413, 414, 415, 416 für jede Tür vorhanden. Bei den Eingabefelder handelt es sich um Bereich, in denen der Installateur für Berühren des berührungssensitiven Bildschirm 41 eine Eingabe machen kann.

In dem Eingabefeld 413 kann der Installateur für jede der Türblätter 3, 4, 2002, 3002 eine Zeitdauer ("short unlock time") einstellen, in diesem Fall frei eingeben. Ein Wert " 5 s" ist voreingestellt, kann aber frei geändert werden. In dem Eingabefeld 414 kann der Installateur den eingegebenen Wert für die Zeitdauer, mit der die Tür 2 ("Door 1") entriegelt bleiben soll, senden ("send value"). Nach Berühren des Eingabefeldes 414 wird über den zweiten Kommunikationskanal 85 der eingegebene Wert für die Zeitdauer für das erste Türblatt an das Inbetriebnahmegerät 30 übermittelt. Der Installateur kann die Eingabe für eine Zeitdauer mit den Eingabefeldern 413, 414 der zweiten Tür 2002 ("Door 2") wiederholen.

In dem Eingabefeld 415 kann der Installateur mittels des "v" Symbols aus mehreren Templates für die Tür 2 auswählen. Bei den Templates handelt es sich um eine Zusammenstellung aus mehreren voreingestellten Parametern und/oder Einstellungen. In dem Eingabefeld 416 kann der Installateur das ausgewählte Template senden ("send template"). Nach Berühren des Eingabefeldes 416 wird über den zweiten Kommunikationskanal 85 das Template an das Inbetriebnahmegerät 30 übermittelt. Der Installateur kann die Eingabe für eine Zeitdauer mit den Eingabefeldern 415, 416 für die "Door 2", d. h. Tür 2002, wiederholen.

Die elektronischen Daten für die Bildschirmansicht sind in dem nicht flüchtigen Speicher 33 des Inbetriebnahmgeräts 30 gespeichert. Ebenfalls sind die Templates, die ausgewählt werden können, und die voreingestellten Parameter in dem nicht flüchtigen Speicher 33 des Inbetriebnahmegeräts 30 gespeichert. Ein Template kann beispielsweise an dem Personal Computer 50 zusammengestellt und an das Inbetriebnahmegerät 30 übermittelt werden.

Nach dem Transferieren der Steuerungsdaten verarbeitet das Inbetriebnahmgerät 30 die Steuerungsdaten und transferiert die bearbeiteten Steuerungsdaten über den ersten Kommunikationskanal 80 an das Steuergerät 20. Das Steuergerät 20 verwendet während des Betriebs die empfangenen Steuerungsdaten. Hierbei kann das Steuerungsgerät 20 die Steuerungsdaten selber verwenden oder zuvor an eine weitere Zugangskomponente des Zugangssicherheitssystems 1 über den Datenbus 400 senden.

Im Rahmen der Erfindung kann auch nur vorgesehen sein, dass nur die Auflistung der Zugangskomponenten oder eine Eingabemöglichkeit für Steuerungsdaten auf dem Bildschirm 41 angezeigt wird. Es kann sein, dass die Eingabemöglichkeit nur für Parameter oder nur für Templates zur Verfügung steht. Ebenfalls ist es im Rahmen der Erfindung denkbar, dass nur für das gesamten Zugangssicherheitssystem 1 Parameter oder Templates eingegeben werden können und nicht für einzelne Türen.

Bevorzugt ist nur eine Untergruppe von allen Parameter, die über den Personal Computer 50 einstellbar sind, von dem Mobilgerät 40 einstellbar. Ebenfalls kann es sein, dass mit dem Personal Computer 50 mehr Templates auswählbar sind als mit dem Mobilgerät 40. In einem Ausführungsbeispiel kann nur genau ein Template auf dem Mobilgerät 40 ausgewählt werden.

Ebenfalls kann es sein, dass auf dem Personal Computer 50 neue Templates erzeugt werden können, nicht jedoch auf dem Mobilgerät 40.

Der Taster 34 ist dafür vorgesehen, die auf dem Bildschirm 41 eingestellten Parameter und/oder Templates wiederholt an weitere Steuergeräte 20 weiterer Zugangssicherheitssysteme 1 weiterzugeben. Hierzu kann durch Drücken des Tasters die zuvor auf dem Bildschirm 41 ausgewählten Parameter und/oder Templates drahtgebunden über das Kabel 81 an weitere Steuergeräte 20 weitergegeben. Hierzu ist es nicht notwendig, erneut eine Eingabe an dem Bildschirm 41 zu tätigen. Vielmehr kann für die weiteren Steuergeräten 20 auf die Benutzung des zweiten Kommunikationskanals 85 verzichtet werden.

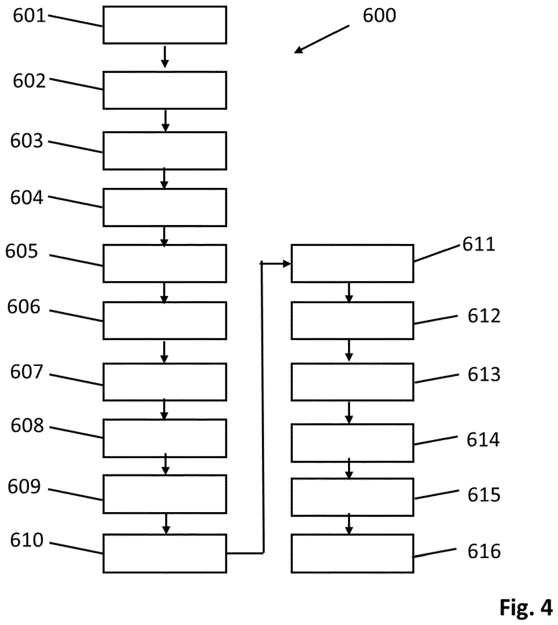

Figur 4 zeigt ein erfindungsgemäßes Verfahren 600. Verfahrensschritte, die aus Sicht eines Geräts 20, 30, 40 geschildert sind, sind aus Sicht eines anderen Geräts auch entsprechend offenbart. Z. B. wenn ein Gerät 20, 30, 40 Daten zu einem weiteren Gerät 20, 30, 40 transferiert, so kann alternativ formuliert werden, dass das weitere Gerät 20, 30, 40 die elektronischen Daten empfängt.

In einem ersten optionalen Verfahrensschritt 601 wird ein Template, das an dem Personal Computer 50 konfiguriert worden ist, auf das Inbetriebnahmegerät 30 transferiert. Hierzu kann das Inbetriebnahmegerät 30 drahtgebunden mit dem Personal Computer 50 verbunden sein, zumindest um mit elektrischer Energie versorgt zu werden. Der Datentransfer von dem Personal Computer 50 zu dem Inbetriebnahmegerät 30 kann drahtgebunden oder kabellos, z.B. über W-LAN, erfolgen. Das auf dem Personal Computer 50 konfigurierte Template kann insbesondere speziell für das in Betrieb zu nehmende Zugangssicherheitssystem 1 konfiguriert worden sein. Vorteilhafterweise ist damit nicht mehr notwendig, den Personal Computer 50 auf die Baustelle mitzunehmen.

Das Inbetriebnahmegerät 30 umfasst des Weiteren bereits in dem nicht flüchtigen Speicher 33 elektronische Daten, um eine Webseite mit der in Figur 3 dargestellten Bildschirmansicht zu generieren. Das Inbetriebnahmegerät 30 kann optional zumindest einen voreingestellten Parameter oder zumindest ein weiteres Template umfassen. Hierbei handelt es sich um ein oder mehrere Templates, die bei einer Vielzahl von Zugangssicherheitssystemen 1 verwendbar sind. Diese elektronischen Daten sind bereits bei der Herstellung des Inbetriebnahmegeräts 30 an das Inbetriebnahmegerät 30 transferiert worden. Alternativ können z. B. von einem Server des Herstellers diese elektronische Daten zu dem Inbetriebnahmegerät 30 transferiert werden.

In einem nächsten Verfahrensschritt 602 wird das Inbetriebnahmegerät 30 von dem Installateur auf die Baustelle mitgenommen. Der Installateur entfernt das Abdeckelement 21 des Steuergeräts 20 und verbindet das Inbetriebnahmegerät 30 mit dem Kabel 81 an der Schnittstelle 25 des Steuergeräts 20. Sofern ein Sabotagealarm durch den Sabotageschalter 23 und die Alarmvorrichtung 24 ausgelöst worden ist, schaltet der Installateur den Sabotagealarm aus.

Das Inbetriebnahmegerät 30 und das Steuergerät 20 richten nun in einem Verfahrensschritt 603 den ersten Kommunikationskanal 80 ein, indem das Inbetriebnahmegerät 30 und das Steuergerät 20 ein erstes Signal austauschen. Das Steuergerät 20 transferiert in einem Verfahrensschritt 604 die Funktion der Zugangskomponenten, z. B. durch einen Transfer der Busadressen der Zugangskomponenten, zu dem Inbetriebnahmegerät 30. Es kann auch sein, dass die Verfahrensschritte 603 und 604 in einem Verfahrensschritt ablaufen.

Der Installateur wird nun die kabellose Kommunikationsverbindung zwischen dem Mobilgerät 40 und dem Inbetriebnahmegerät 30 herstellen. Hierzu sendet das Inbetriebnahmegerät 30 eine SSID aus. Der Installateur kann auf dem Mobilgerät 40 das Inbetriebnahmegerät 30 auswählen. Alternativ kann die SSID auf dem Gehäuse 31 des Inbetriebnahmegerät 30 optisch dargestellt sein, entweder als Zeichenfolge oder als optisches Zeichen, z. B. als QR-Code, der von dem Mobilgerät 40 eingelesen werden kann.

Bevor sich das Mobilgerät 40 und das Inbetriebnahmegerät 30 miteinander verbinden, muss der Installateur ein Passwort eingeben. Das Inbetriebnahmegerät 30 und das Mobilgerät 40 richten nun in einem Verfahrensschritt 605 den zweiten Kommunikationskanal 85 ein, indem das Inbetriebnahmegerät 30 und das Mobilgerät 40 ein erstes Signal austauschen.

Dann öffnet der Installateur einen Web-Browser auf dem Mobilgerät 40 und gibt die statische IP-Adresse der von dem Inbetriebnahmegerät 30 gehosteten Webseite oder eine charakteristische Zeichenfolge für die gehostete Webseite in einem Verfahrensschritt 606 ein. Insbesondere ist die gehostete Webseite über ein Multicast DNS Protokoll erreichbar, so dass es ausreicht, eine charakteristische Zeichenfolge in den Web-Browser einzugeben. Die Webseite kann ebenfalls mit einem Passwort geschützt sein, das der Installateur eingeben muss. Alternativ zu den Passwort bzw. den Passwörtern kann eine biometrische Authentifizierung des Installateurs erfolgen.

Nun werden in einem Verfahrensschritt 607 die elektronischen Daten, die Bildschirmansicht mit den Funktionen der Zugangskomponenten und den einzustellenden Steuerungsdaten erzeugen, an das Mobiltelefon 20 transferiert.

In einem Verfahrensschritt 608 überprüft der Installateur den Aufbau des Zugangssicherheitssystem 1 anhand der auf dem Bildschirm 41 dargestellten Zugangskomponenten. Zusätzlich stellt der Installateur zumindest einen Parameter ein und/oder sucht ein Template aus. Die derart erzeugten Steuerungsdaten werden über den zweiten Kommunikationskanal 85 an das Inbetriebnahmegerät 30 transferiert.

In einem Verfahrenschritt 609 verarbeitet das Inbetriebnahmegerät 30 die von dem Mobilgerät 40 empfangenen elektronischen Steuerungsdaten derart, so dass das Steuergerät 20 die elektronischen Daten zur Steuerung des Zugangssicherheitssystems 1 verwenden kann. Danach transferiert das Inbetriebnahmegerät 30 die elektronischen Daten an das Steuergerät 20.

Der Installateur beendet den ersten Kommunikationskanal 80 in einem Verfahrensschritt 610, indem der Installateur das Kabel 81 von der Schnittstelle 25 trennt. Der Installateur befestigt das Abdeckelement 21 an dem Gehäusegrundkörper 22, so dass die Schnittstelle 25 durch ein geschlossenes Gehäuse und den Sabotageschalter 23 vor einem unauthorisierten Zugriff geschützt ist. Hierdurch ist das Inbetriebnahmegerät 30 stromlos, so dass auch der zweite Kommunikationskanal 85 unterbrochen ist.

Alternativ wird der zweite Kommunikationskanal 85 automatisch nach einer vorgegebenen Zeitspanne unterbrochen. Hierzu umfasst die Elektronikvorrichtung 32 einen Timer. Die vorgegebene Zeitspanne ist in der Elektronikvorrichtung 32 hinterlegt.

In einem weiteren Verfahrensschritt 611 überprüft der Installateur die Funktionen zumindest einiger Zugangskomponenten und/oder überprüft, ob das Zugangssicherheitssystem 1 gemäß den eingestellten Steuerungsdaten arbeitet. Hierzu begibt sich der Installateur zu den Nottastern 10, 1010, 2010, 3010 des Zugangssicherheitssystems 1 und betätigt die Nottaster 10, 1010, 2010, 3010 nacheinander. Der Installateur überprüft, ob nach der Betätigung des jeweiligen Nottasters 10, 1010, 2010, 3010 die jeweilige zugeordnete Türverriegelung bzw. Türverriegelungen 200, 1200, 2200 bzw. 3200 entriegelt werden und der Fluchtweg damit freigegeben.

Des Weiteren überprüft der Installateur die eingestellten Zeitdauern in einem Verfahrensschritt 612. Hierzu authentifiziert sich der Installateur an der Zugangskontrollgerät 500, 1500, 2500, 3500 und überprüft, wie lange die dazugehörige Türverriegelung 200, 1200, 2200, 3200 entriegelt bleibt. Im Falle von Templates kann die Zusammenstellung von Parameter und/oder das Zusammenspiel der einzelnen Zugangskomponenten entsprechend beobachtet werden, z.B. das Entriegeln mehrere Türen 2, 2002, 3002 in einer zeitlich vorgegebenen Reihenfolge oder nach einer Betätigung des Nottasters 10, 1010, 2010, 3010 eine Entriegelung und eine Alarmauslösung nach aufeinander abgestimmten Zeitintervallen, etc.

Nach dem Beenden des ersten und des zweiten Kommunikationskanals 80, 85 kann der Installateur zu einem zweiten Steuergerät 20 desselben oder eines weiteren Zugangssicherheitssystems 1 gehen. Sollen jeweils dieselben Steuerungsdaten an das zweite Steuergerät 20 transferiert werden, so ist es nicht nötig, erneut den zweiten Kommunikationskanals 85 zu errichten. Vielmehr genügt es, wenn in einem Verfahrensschritt 613 der Installateur mit dem zweiten Steuergerät 20 einen weiteren drahtgebundenen Kommunikationskanal 80 errichtet. Hierzu wird von dem zweiten Steuergerät 20 die Abdeckung 21 derart entfernt, so dass der Installateur das Kabel 81 an die Schnittstelle 25 des zweiten Steuergeräts anschließen kann. Ggf. hat der Installateur den durch den Sabotageschalter 23 ausgelösten Alarm zu beenden.

In einem weiteren Verfahrensschritt 614 werden die bereits im Verfahrenschritt 609 erzeugten Steuerungsdaten über den drahtgebundenen Kommunikationskanal 80 an das zweite Steuergerät 20 transferiert, indem der Installateur den Taster 34 betätigt. Hiernach schließen sich Verfahrensschritte 615 und 616 an, die den Verfahrensschritten 610 und 611 entspricht. D. h. der Installateur beendet den Kommunikationskanal zwischen dem zweiten Steuergerät 20 und dem Inbetriebnahmegerät 30 und schließt das Gehäuse 21, 22 des zweiten Steuergeräts 20 in dem Verfahrensschritt 615. In dem Verfahrensschritt 616 überzeugt sich der Installateur durch Betätigung des Nottasters oder durch Authentifzierung an dem Zugangskontrollgerät von der Korrektheit der transferierten Steuerungsdaten.

Die Verfahrensschritte 613 bis 616 können mehrfach an weiteren Steuergeräten wiederholt werden.

Figur 5 zeigt ein alternatives Inbetriebnahmesystem 100. Sofern nicht im Folgenden beschrieben, gelten die Ausführungen zu dem ersten Ausführungsbeispiel und dem erfindungsgemäßen Verfahren 600 analog. Hierbei ist das Zugangssicherheitssystem 1 für eine einzige Tür 2002 ausgebildet. Das Zugangssicherheitssystem 1 umfasst einen Nottaster 2010 mit einem Leuchtring 2011, ein Zugangskontrollgerät 2500, eine elektromagnetische Türverriegelung 2200 und (nicht dargestellt) ein Schloss, das mittels des Türgriffs 2060 entriegelt werden kann. Das Steuergerät 20 ist in diesem Ausführungsbeispiel in dem Nottaster 2010 integriert. D. h. der Installateur nimmt die Abdeckung 21 von dem Gehäuse des Nottasters 2010 ab, um an die Kommunikationsschnittstelle 25 zu gelangen und mittels des Kabels 81 eine drahtgebundene Verbindung zu dem Inbetriebnahmegerät 30 zu schaffen.

Die Bildschirmansicht enthält entsprechend nur die "Door 1" Felder. Es kann sein, dass das "Devices" Feld 412 fehlt, da der Installateur direkt an der Tür das Vorhanden sein und die Funktionen der Zugangskomponenten 2010, 2500, 2200 überprüfen kann. Besonders im Falle vieler Zugangssicherheitssysteme 100, die jeweils nur Zugangskomponenten für eine Tür 2002 umfassen, kann es sinnvoll sein, einmal die Parameter an dem Bildschirm 41 einzugeben und danach mittels des Tasters 34 an den weiteren Zugangssicherheitssystemen 1 den Parametertransfer von dem Inbetriebnahmegerät 30 zu dem Steuergerät 20 zu initiieren.

In Figur 5 ist der Nottaster 2010 als Unterputznottaster ausgebildet. Der Gehäusegrundkörper des als Steuergeräts 20 dienenden Nottasters 2010 entspricht hierbei einer Unterputzdose. Figur 6 zeigt einen abgewandelten Nottaster 2010 für das Ausführungsbeispiel der Figur 5 in einem Aufputzgehäuse mit einer Abdeckung 21 und einem Gehäusegrundkörper 22. Hierbei ist der Nottaster 2010, der zugleich als Steuergerät 20 dient, im geschlossenen Zustand (linke Abbildung) und im geöffneten Zustand (rechte Abbildung) abgebildet. Das Zugangskontrollgerät 2500 ist in dem Gehäuse 21, 22 integriert. Ein Betätigungselement 2012 des Nottasters 2010 wird von dem Leuchtring 2011 umgeben. In dem geöffneten Zustand des Nottasters 2010, der als Steuergerät 20 dient, ist ein Sabotageschalter 23 hinter einer Platte 23.1 versteckt.

Auf einer Platine 26 sind neben dem Controller 27, der auf der Abdeckung 21 zugewandten Seite der Platine 26 angeordnet ist, der Busanschluss 28 und der Stromanschluss 29 angeordnet. Zudem ist auf der Platine 26 die drahtgebundene Schnittstelle 25 für das Kabel 81 angeordnet. Der Installateur kann nun in dem geöffneten Zustand mit abgenommener Abdeckung 21 das Kabel 81 an der Schnittstelle 25 befestigen.

Viele weitere Ausführungsformen sind von der vorliegenden Erfindung umfasst. So kann das Zugangssicherheitssystem 1 auch alternativ zwei oder drei Türen umfassen. Der Personal Computer 50 kann Teil des Inbetriebnahmesystems 100 sein, insbesondere um Templates zu erstellen. Der Personal Computer 50 kann in dem Inbetriebnahmesystem 100 fehlen, insbesondere wenn keine besondere Lösung erstellt werden muss. Die Nottaster können jeweils als Aufputz- oder als Unterputznottaster ausgebildet sein. Das Steuergerät 20 kann auch bei dem Zugangssicherheitssystem 1 des Ausführungsbeispiels der Figur 5 separat von dem Nottaster 2010 ausgebildet sein, analog zu dem Ausführungsbeispiel der Figur 1. Andersherum kann das Steuergerät 20 in dem Ausführungsbeispiel der Figur 1 in einem der Nottaster 10, 1010, 2010, 3010 integriert sein.

## Patentansprüche

1. Verfahren (600) zur Inbetriebnahme eines Zugangssicherheitssystems (1), insbesondere eines Fluchttürsicherungssystems, wobei das Zugangssicherheitssystem (1) eine Mehrzahl von Zugangskomponenten (10, 20, 70, 71, 200, 1010, 1200, 2010, 2200, 3010, 3200) umfasst, wobei mindestens eine erste Zugangskomponente (10, 20, 70, 71, 200, 1010, 1200, 2010, 2200, 3010, 3200) der Mehrzahl von Zugangskomponenten (10, 20, 70, 71, 200, 1010, 1200, 2010, 2200, 3010, 3200) eine drahtgebundene Kommunikationsschnittstelle aufweist, an die ein Inbetriebnahmegerät (30) anschließbar ist, wobei das Verfahren (600) insbesondere vom Inbetriebnahmegerät (30) ausgeführt wird und die folgenden Schritte umfasst:
• Einrichtung eines ersten drahtgebundenen Kommunikationskanals (80) zwischen dem Inbetriebnahmegerät (30) und der ersten Zugangskomponente mittels der drahtgebundenen Kommunikationsschnittstelle (25) der ersten Zugangskomponente,
• Einrichtung eines zweiten Kommunikationskanals (85) zwischen dem Inbetriebnahmegerät (30) und einem Mobilgerät (40) mittels einer drahtlosen Kommunikationstechnologie,
• Bereitstellung einer Kommunikation elektronischer Daten zwischen dem Mobilgerät (40) und der mindestens einen Zugangskomponente (10, 20, 70, 71, 200, 1010, 1200, 2010, 2200, 3010, 3200) basierend auf dem ersten und dem zweiten Kommunikationskanal (80, 85).

2. Verfahren (600) nach Anspruch 1, wobei der zweite Kommunikationskanal (85) direkt zwischen dem Inbetriebnahmegerät (30) und dem Mobilgerät (40) eingerichtet wird, bevorzugt über IEEE 802.11, insbesondere WLAN.

3. Das Verfahren (600) nach Anspruch 1 oder 2, wobei vor der Einrichtung des zweiten Kommunikationskanals (85) folgender Schritt ausgeführt wird:
Bereitstellung eines vom World-Wide-Web isolierten lokalen Zugangspunkts, wobei das Inbetriebnahmegerät (30) als lokaler Web-Server agiert, mit dem das Mobilgerät (40) zur Herstellung des zweiten Kommunikationskanals (85) verbindbar ist und vorzugsweise mittels einem auf dem Mobilgerät (40) verfügbaren Web-Browser zugreifen kann.

4. Verfahren (600) nach einem der vorhergehenden Ansprüche, wobei die elektronischen Daten, die das Inbetriebnahmegerät (30) an das Mobilgerät (40) über den zweiten Kommunikationskanal (85) transferiert, zumindest teilweise vor der Einrichtung des ersten Kommunikationskanals (80) in einem elektronischen, nicht flüchtigen Speicher des Inbetriebnahmegeräts (30) gespeichert worden sind und/oder mittels des ersten Kommunikationskanals (80) von dem Inbetriebnahmegerät (30) transferiert worden sind und/oder wobei das Mobilgerät (40) eine Anzeigevorrichtung (41) umfasst, wobei das Inbetriebnahmegerät (30) elektronischen Daten zum Anzeigen auf der Anzeigevorrichtung (41) an das Mobilgerät (40) transferiert.

5. Verfahren (600) nach einem der vorhergehenden Ansprüche, wobei die Zugangskomponenten (10, 20, 70, 71, 200, 1010, 1200, 2010, 2200, 3010, 3200) über zumindest einen Datenbus (400) miteinander verbunden sind, wobei die elektronischen Daten, die das Inbetriebnahmegerät (30) über den zweiten Kommunikationskanal (85) an das Mobilgerät (40) transferiert, zumindest ein charakteristisches Merkmal einer Busadresse oder einer UID oder einer Art oder einer Funktion zumindest einer der Zugangskomponenten (10, 20, 70, 71, 200, 1010, 1200, 2010, 2200, 3010, 3200), bevorzugt mehrerer der Zugangskomponenten (10, 20, 70, 71, 200, 1010, 1200, 2010, 2200, 3010, 3200), besonders bevorzugt aller Zugangskomponenten (10, 20, 70, 71, 200, 1010, 1200, 2010, 2200, 3010, 3200), umfasst.

6. Verfahren (600) nach Anspruch 5, wobei die Busadressen der Zugangskomponenten (10, 20, 70, 71, 200, 1010, 1200, 2010, 2200, 2500, 3010, 3200) sich teilweise durch eine manuelle Einstellung an der Zugangskomponente (10, 20, 70, 71, 200, 1010, 1200, 2010, 2200, 2500, 3010, 3200) ergeben, wobei das charakteristische Merkmal die manuelle Einstellung widerspiegelt und/oder wobei das Zugangssicherheitssystem Zugangskomponenten für mehrere Zugangsbarrieren (2, 2002, 3002) umfasst und die elektronischen Daten, die das Inbetriebnahmegerät (30) an das Mobilgerät (40) transferiert, derart ausgebildet sind, dass die charakteristischen Merkmale der Zugangskomponenten (10, 20, 70, 71, 200, 1010, 1200, 2010, 2200, 3010, 3200) nach Zugangsbarrieren (2, 2002, 3002) geordnet auf der Anzeigevorrichtung angezeigt werden.

7. Das Verfahren (600) nach einem der vorhergehenden Ansprüche, wobei das Verfahren (600) ferner umfasst:
Transferieren von elektronischen Daten von dem Installationsgerät an das Mobilgerät (40) mittels des zweiten Kommunikationskanals (85), wobei die elektronischen Daten, die das Inbetriebnahmegerät (30) an das Mobilgerät (40) transferiert, Daten zur Auswahl und/oder zum Eingeben und/oder zur Bestätigung mittels einer Eingabevorrichtung des Mobilgeräts (40) betreffen,
Empfang elektronischer Daten vom Mobilgerät (40) mittels des zweiten Kommunikationskanals (85), wobei die elektronischen Daten auf von einem Installateur in das Mobilgerät (40) eingegebenen Informationen basieren und Steuerungsdaten für das Zugangssicherheitssystem (1) betreffen;
Transferieren der empfangenen elektronischen Daten an die mindestens eine Zugangskomponente (10, 20, 70, 71, 200, 1010, 1200, 2010, 2200, 3010, 3200) mittels des ersten Kommunikationskanals (80);
Optional, Transformieren der empfangenen elektronischen Daten in ein Datenformat, welches, von einer oder mehreren Zugangskomponenten (10, 20, 70, 71, 200, 1010, 1200, 2010, 2200, 3010, 3200) der Mehrzahl von Zugangskomponenten (10, 20, 70, 71, 200, 1010, 1200, 2010, 2200, 3010, 3200), ausführbare Steuerungsdaten umfasst.

8. Verfahren (600) nach Anspruch 7, wobei die elektronische Steuerungsdaten, die das Inbetriebnahmegerät (30) über den ersten Kommunikationskanal (80) transferiert, zumindest einen mittels der Eingabevorrichtung eingestellten Parameter umfassen und/oder wobei die Steuerungsdaten zumindest eine mittels der Eingabevorrichtung ausgewählte, vor der Auswahl vorkonfigurierte Zusammenstellung, die mehrere Parameter und/oder Einstellungen für den Betrieb des Zugangssicherheitsystems (1) aufweisen, umfassen.

9. Verfahren (600) nach Anspruch 7 oder 8, wobei die Steuerungsdaten eine strikte Untergruppe von Steuerungsdaten sind, die für das Zugangssicherheitssystem (1), insbesondere über einen auf einem Personal Computer (50) installierten Inbetriebnahmesoftware, eingestellt werden können.

10. Verfahren (600) nach einem der vorhergehenden Ansprüche, wobei nacheinander mittels des Inbetriebnahmegeräts (30) eine Übermittlung von denselben Steuerungsdaten an mehrere Zugangssicherheitssysteme (1) erfolgt, wobei die folgende Schritte insbesondere von dem Inbetriebnahmegerät (30) durchgeführt werden:
Einrichten eines drahtgebundenen Kommunikationskanals (80) zwischen dem Inbetriebnahmegerät (30) mit einer kabelgebundenen Kommunikationsschnittstelle (25) einer Zugangskomponenten (10, 20, 70, 71, 200, 1010, 1200, 2010, 2200, 3010, 3200) eines weiteren Zugangssicherheitssystems (1) nach Beendigung des ersten Kommunikationskanals (80),
Transferieren derselben Steuerungsdaten über den drahtgebundenen Kommunikationskanal (80) an die Zugangskomponente (10, 20, 70, 71, 200, 1010, 1200, 2010, 2200, 3010, 3200) des weiteren Zugangssicherheitssystems (1),
insbesondere nachdem ein elektrisches Signal, das durch die Betätigung eines Tasters des Inbetriebnahmegeräts (30) erzeugt worden ist, durch einen elektrischen Controller des Inbetriebnahmegeräts (30) detektiert worden ist und/oder insbesondere ohne Einrichten eines Kommunikationskanals mit dem Mobilgerät (40).

11. Verfahren (600) nach einem der vorhergehenden Ansprüche, wobei eine Zugangskomponente 10, 20, 70, 71, 200, 1010, 1200, 2010, 2200, 3010, 3200) als ein Aktor (70, 71, 200, 1200, 2200, 3200) zum Öffnen und/oder Entriegeln der Zugangsbarriere (2, 2002, 3002) ausgebildet ist und eine mit einem Installateur interagierbare Zugangskomponente (10, 1010, 2010, 2200, 3010), die den Aktor zum Öffnen und/oder Entriegeln der Zugangsbarriere (2, 2002, 3002) veranlasst, ausgebildet ist, wobei das Verfahren (600) den folgenden Schritt, ausgeführt von dem Zugangssicherheitssystem (1), umfasst:
• Senden eines Befehls von der interagierbaren Zugangskomponente (10, 1010, 2010, 2200, 3010) an den Aktor (70, 71, 200, 1200, 2200, 3200)
• Öffnen und/oder Entriegeln der Zugangsbarriere (2, 2002, 3002) durch den Aktor (70, 71, 200, 1200, 2200, 3200),
wobei insbesondere vor dem Senden des Befehls der Installateur mit der interagierbaren Zugangskomponenten (10, 1010, 2010, 2200, 3010) interagiert hat und/oder wobei insbesondere die an die Zugangskomponente (10, 20, 70, 71, 200, 1010, 1200, 2010, 2200, 3010, 3200) übertragenene Parameter und/oder vorkonfigurierten Zusammenstellungen überprüft werden und/oder die auf der Anzeigevorrichtung (41) angezeigten charakteristischen Merkmal verifiziert werden.

12. Verfahren (600) nach einem der vorhergehenden Ansprüche, wobei das Verfahren (600) zumindest den Schritt ausgeführt von dem Mobilgerät (40) umfasst:
Empfang von elektronischen Daten von dem Inbetriebnahmegerät (30) über den zweiten Kommunikationskanal (85),
Anzeigen von Informationen basierend von den elektronischen Daten auf einer Anzeigevorrichtung (41) des Mobilgeräts (40),
wobei insbesondere das Verfahren (600) insbesondere den folgenden Schritt, der von dem Mobilgerät (40) ausgeführt wird, umfasst:
Transferieren elektronischer Daten mittels des zweiten Kommunikationskanals (85), wobei die elektronischen Daten auf von einem Installateur in das Mobilgerät (40) eingegebenen Informationen basieren und Steuerungsdaten für das Zugangssicherheitssystem (1) betreffen.

13. Inbetriebnahmegerät (30) ausgebildet zur Durchführung des Verfahrens (600) nach einem der Ansprüche 1 bis 12.

14. Inbetriebnahmesystem (100) umfassend ein Zugangssicherheitssystem (1), ein Mobilgerät (40) und ein Inbetriebnahmegerät (30) zur Durchführung des Verfahrens (600) nach einem der Ansprüche 1 bis 12.

15. Inbetriebnahmesystem (100) nach Anspruch 14, wobei die Zugangskomponente (10, 20, 70, 71, 200, 1010, 1200, 2010, 2200, 3010, 3200), die über den ersten Kommunikationskanal (80) mit dem Inbetriebnahmegerät (30) verbunden ist, einem Steuergerät (20) des Zugangssicherheitssystems (1) entspricht und/oder die Kommunikationsschnittstelle (25) zur Herstellung der drahtgebundenen Kommunikationskanals (80) mit dem Inbetriebnahmegerät (30) im Inneren eines Gehäuses der Zugangskomponente (10, 20, 70, 71, 200, 1010, 1200, 2010, 2200, 3010, 3200) oder hinter einer Abdeckung (21) der Zugangskomponente (10, 20, 70, 71, 200, 1010, 1200, 2010, 2200, 3010, 3200) angeordnet ist, wobei insbesondere die Abdeckung (21) durch einen Sabotagekontakt (23) und/oder ein Zugangskontrollgerät (500, 1500, 2500, 3500) geschützt ist.

16. Inbetriebnahmesystem (100) nach Anspruch 14 oder 15, wobei die Zugangskomponenten (10, 20, 70, 71, 200, 1010, 1200, 2010, 2200, 3010, 3200), insbesondere das Steuergerät (20), ausgebildet ist, in einem Funktionsraum oder innerhalb einer Gebäudekonstruktion, beispielsweise einer Zwischendecke, entfernt von der Tür (2, 2002, 2003, 3002) angeordnet zu werden.
